# EUROPEAN PATENT SPECIFICATION

(11) **EP 2 925 820 B1**
(45) Date of publication and mention of the grant of the patent: **10.05.2017**
(21) Application number: 13799652.6
(22) Date of filing: 29.11.2013
(51) Int. Cl.: C09D 5/08

(54) **SO-GEL DERIVED COATING TO INHIBIT BIOFOULING AND CORROSION AT A SUBSTRATE**
SOL-GEL-ÜBERZUGSMITTEL ZUR HEMMUNG EINER BIOVERFAULUNG UND KORROSION AUF EINEM SUBSTRAT
REVÊTEMENT ISSU DE SOL-GEL POUR INHIBER L'ENCRASSEMENT BIOLOGIQUE ET LA CORROSION AU NIVEAU D'UN SUBSTRAT

(30) Priority: 03.12.2012 GB 201221703
(43) Date of publication of application: 07.10.2015
(73) Proprietor: Sheffield Hallam University, South Yorkshire S1 1WB (GB); King Fahd Univ. of Petroleum&Minerals, Dhahran 31261 (SA)
(72) Inventor: GITTENS, Jeanette, Sheffield South Yorkshire S1 1WB (GB); WANG, Heming, Sheffield South Yorkshire S1 1WB (GB); AKID, Robert, Sheffield South Yorkshire S7 2LS (GB); SMITH, Thomas, Sheffield South Yorkshire S1 1WB (GB); SULEIMAN, Rami, Khalid, Dhahran 31261 (SA); KHALED, Mazan, Mohammed, Dhahran 31261 (SA)
(74) Representative: Neilson, Martin Mark
(86) International application number: PCT/GB2013/053156
(87) International publication number: WO 2014/087139

(56) References cited:
- WO-A1-2009/030959
- WO-A2-2006/120387
- WO-A2-2010/023483
- R. Akid ET AL: "Green antifouling coatings: encapsulated 'protective' bacteria within sol-gel matrices", , 8 May 2010 (2010-05-08), XP055119284, Retrieved from the Internet: URL:https://connect.innovateuk.org/documen ts/2998699/3676088/Akid and smith presentation.pdf/bc71136f-f20c-46c8-aae1-3 413be829250 [retrieved on 2014-05-21]
- R. AKID ET AL: "Biological Functionalization of a Sol-Gel Coating for the Mitigation of Microbial-induced Corrosion", ADVANCED FUNCTIONAL MATERIALS, vol. 18, no. 2, 24 January 2008 (2008-01-24), pages 203-211, XP55119747, ISSN: 1616-301X, DOI: 10.1002/adfm.200600493
- AKID R ET AL: "APPLICATION OF SOL-SEL TECHNOLOGY FOR ANTI-CORROSION COATINGS AND SURFACE PRE-TREATMENTS", GALVANOTECHNIK, EUGEN G.LEUZE VERLAG, SAULGAU/WURTT, DE, vol. 97, no. 9, 1 September 2006 (2006-09-01), pages 2098-2109, XP001501420, ISSN: 0016-4232
- JEANETTE E. GITTENS ET AL: "Biotic Sol-Gel Coating for the Inhibition of Corrosion in Seawater", ECS TRANSACTIONS, vol. 24, 1 January 2010 (2010-01-01), pages 211-229, XP55119753, ISSN: 1938-5862, DOI: 10.1149/1.3453618
- WANG H ET AL: "Encapsulated cerium nitrate inhibitors to provide high-performance anti-corrosion sol-gel coatings on mild steel", CORROSION SCIENCE, OXFORD, GB, vol. 50, no. 4, 1 April 2008 (2008-04-01), pages 1142-1148, XP023612485, ISSN: 0010-938X, DOI: 10.1016/J.CORSCI.2007.11.019 [retrieved on 2007-12-08]
- NABLO B J ET AL: "Nitric oxide-releasing sol-gels as antibacterial coatings for orthopedic implants", BIOMATERIALS, ELSEVIER SCIENCE PUBLISHERS BV., BARKING, GB, vol. 26, no. 8, 1 March 2005 (2005-03-01), pages 917-924, XP027767804, ISSN: 0142-9612 [retrieved on 2005-03-01]

## Description

### Field of invention

The present invention relates to a substrate comprising a protective coating and to a method of preparing a substrate using a sol gel derived coating that incorporates a microorganism and a corrosion inhibitor to inhibit biofouling and corrosion at the substrate.

### Background art

Microbiological induced corrosion (MIC) of metallic materials has received considerable attention over the last two decades. It is estimated that at least one-third of material loss arising from corrosion can be attributed to MIC. Both aerated and oxygen starved environments can lead to the formation of various types of metabolites which directly participate in electrochemical reactions that lead to the establishment of local corrosion cells. The role of sulphate-reducing bacteria (SRB) in MIC is well established and corrosion can result from the formation of biofilms containing bacteria. For example, corrosion of iron and nickel has been reported to increase in the presence of *Pseudomonas* sp. S9 and *Serratia marcescens* sp. EF 190. On the other hand, some bacterial strains including *Pseudomonas fragi, Escherichia coli* DH5, *Pseudomonas flava* and *Paenibacillus polymyxa* are known to inhibit corrosion when present in biofilms.

One existing approach to mitigate microbe influenced corrosion involves adding biocides to water systems in a direct attempt to limit the development of surface biofilms within which microbes secrete highly aggressive acidic or alkaline compounds. The efficacy of this approach is dependent upon (a) the biocide being delivered to all water-metal substrate interaction sites and (b) the biocide remaining active to prevent biofilm development/growth. These biocides are both hazardous to the environment. For example tri-butyl tin is toxic to aquatic life, as well as to any one working in the immediate vicinity. They are also known to be relatively ineffective against bacteria protected in a biofilm on the surface of the corroding metal.

In another approach, a coating was developed for use on Al alloys and contained encapsulated 'protective' bacteria [R. Akid, H. Wang, T.J. Smith, D. Greenfield, and J.C. Earthman. Adv. Funct. Mater. 18 (2008) 203-211]. However, Al alloys are relatively inert materials for corrosion compared to mild steel and other metal substrates and are less susceptible to MIC.

More recently, work has been undertaken to develop sol-gel coatings for application onto metal surfaces to serve as a protective barrier against corrosive species [F. Tang, X. Wang, X. Xu, L. Li., Colloids and Surfaces A: Physicochemical and Engineering Aspects 369 (2010) 101-105]. Much interest has focused on hybrid organic-inorganic sol-gel coatings in order to achieve higher critical thickness, improved flexibility and lower curing temperatures than those of their inorganic counterparts. Sol-gel systems have been developed for a variety of applications and functionality, for example, anticorrosion/barrier properties [H. Wang, R. Akid, M. Gobara, Corrosion Science, 52 (2010) 2565-2570, A.N. Khramov, V.N. Balbyshev, N.N. Voevodin & M.S. Donley., Progress in Organic Coatings, 47 (2003), 207-213, S.V. Lamaka, M.F. Montemore, A.F. Galio, M.L. Zheludkevich, C. Trindade, L.F. Dick & M.G.S Ferreira., Electrochemical Acta, 53 (2008) 4773-4783] antifouling and anti-microbial induced corrosion properties [R. Akid, H. Wang, T.J. Smith, D. Greenfield, J.C. Earthman, Advanced Functional Materials, 18 (2008), 203-211, J. Gittens, H. Wang, T.J. Smith, R. Akid, D. Greenfield, ECS Transactions, 24 (2010), 211-229], anti-corrosion with self-repair functionality [R. Akid, M. Gobara, H. Wang, Electrochimica Acta, 56 (2011), 2483-2492] and structural adhesives [M. May, H. Wang & R. Akid, International Journal of Adhesion and Adhesives, 30 (2010), 505-512].

However, there exists a need for a sol-gel coating that exhibits enhanced resistance to corrosion and biofouling in a real environment such as the submersion of a metal substrate within the sea.

### Summary of the Invention

It is an object of the present invention to provide a coating and a method of protecting a substrate against corrosion (in particular microbial induced corrosion) and biofouling that includes in particular development of local environments that would favour the formation of harmful biofilms at the interface of the substrate. The present coating and method effectively protect the underline substrate from chemical species and microorganisms. The objective is achieved, in part, by providing a sol-gel derived coating that is chemically bonded to the substrate and comprises a corrosion inhibiter and a viable microorganism incorporated within the coating.

The corrosion inhibiters and microorganisms are effective to prevent the reactive species and the microorganisms from penetrating into the coating via the micropores, cracks and areas of low cross-linked density. Such corrosive species include for example water, oxygen, chloride ions and bioactive species. Incorporation of inorganic or organic corrosion inhibitors and/or viable microorganisms into the sol-gel film has been found to significantly increase the corrosion protection properties of the coating.

Reference to 'viable' within the specification encompasses microorganisms that maintain some metabolic activity, however it does not necessarily encompass culturable microorganisms. Experimental work has shown that the mixtures of the present invention provide protection against corrosion/biofouling when there is relatively little evidence of the microorganism growing or respiring. Therefore, there is no absolute requirement for the microorganism to be growing.

The term 'biofouling' used within this specification refers to the accumulation of microorganisms on exposed and/or structures that are submerged in for example aqueous environments. The term 'biofouling' includes microfouling, macrofouling and biofilm formation.

The present coating formulation may be applied as a coating to a range of substrates, such as outdoor structures including but not limited to civil engineering structures, marine structures, marine vessels, aircraft, vehicles, and like structures which are exposed to weather or corrosive environments. In particular, the present coating is suitable for application onto metal based substrates in addition to polymer, plastics, fibreglass and other non-metal based substrates that find application in the above environments.

In one aspect, it is believed that the protective nature of the present formulation coating may be due to the biological activity of the microorganism or due to the coating providing an extra barrier against corrosion/biofouling due to the take up of water and oxygen by the biologically active agent which prevents these elements from reaching the surface of the substrate and thus causing corrosion/biofouling.

Where the coating comprises a viable microorganism, according to one implementation, it is advantageous to prepare two separate components according to the above method as it enables the components to be stored separately for long periods of time prior to mixing and subsequent application as a coating to the surface of the substrate. The components are stable in their given environments and so will be equally as effective if used when it is first prepared, or used after storing for a period of time. Furthermore, as the two components are prepared separately, it is possible to optimise the sol for thickness, curing times and density etc. and optimise the suspension to provide an optimised environment for the biological or other corrosion/biofouling-inhibiting activity of the microorganism. In this way, any components of the sol which may be detrimental to the biological or other activity of the microorganism can be isolated and stabilised before mixing of the sol and suspension prior to coating the substrate.

The components of the sol are selected to provide optimum environmental conditions for the microorganism of the suspension. In particular the pH is sufficiently neutral to permit survival of the microorganism and the temperature at which the mixture is cured is around room temperature but not in excess of 120°C. Furthermore, the composition of the sol-gel preferably excludes any components which may be detrimental to the biological or other corrosion/biofouling inhibiting activity of the microorganism, for example, solvents and metal oxides. These conditions have been selected so that the microorganism maintains its viability in order to successfully inhibit or prevent corrosion/biofouling of the substrate. Hybrid sol-gel systems are obtained from the structural incorporation of organic groups via Si-C bonds within the sol-gel precursors (for example, methyltriethoxisilane [MTES]), thus leading to incorporation of organic groups into SiO₂-based inorganic coatings. To avoid the issues related to the oxidation of CH₃ groups [Andrés Pepe, Pablo Galliano, Mario Aparicio, Alicia Durán, Silvia Cere, Surface & Coatings Technology, 200 (2006) 3486 - 3491], sintering temperatures well below 550 °C are used.

Advantageously, the present coating comprises a corrosion inhibitor that significantly reduces corrosion at the substrate. The present inorganic-organic sol-gel coating is suitable to incorporate a diverse range of different corrosion inhibitors including by way of example, organic or inorganic inhibitors.

According to a first aspect of the present invention there is provided a substrate having a coating bonded to the substrate and configured to protect the substrate from corrosion and biofouling, the coating obtainable by a sol-gel process to create an inorganic oxide network resultant from condensation reactions of at least one inorganic oxide; the coating comprising: a viable microorganism incorporated within the coating, the microorganism capable of reacting chemically with microbes responsible for microbial induced corrosion and biofouling and configured to inhibit the biological activity of said microbes; and a corrosion inhibitor configured to inhibit corrosion and/or biofouling at the substrate.

Preferably, the corrosion inhibitor comprises any one or a combination of the following set of: a phosphate; a vanadate; a borate; cerium; molybdenum. Preferably, the corrosion inhibitor comprises an organic or inorganic compound. Preferably, the corrosion inhibitor comprises any one or a combination of the following set of: a lithium grease; a synthetic hydrocarbon oil; a mineral oil; an organic molybdenum compound. Preferably, the corrosion inhibitor comprises any one or a combination of the following set of: a silicone based compound; a silica-calcium based compound. Preferably, the corrosion inhibitor comprises any one or a combination of the following set of: a modified orthophosphate; a polyphosphate; a calcium modified silicone gel. Preferably, the inorganic oxide comprises any one or a combination of the following set of: a metal oxide; an aluminate-based compound; a silica based compound; a hybrid organic-inorganic compound; an ormosil or ormosil hybrid. Preferably, the inorganic oxide comprises any one or a combination of the following set of: tetramethoxysilane (TMOS); tetraethoxysilane (TEOS); 3-glycidoxypropylmethoxysilane (GLYMO); methyletryoxysilane (MTEOS).

Preferably, the microorganism comprises any one or a combination of the following; prokaryotic cells; archaeal cells; bacterial cells; endospores.

Preferably, the corrosion inhibitor is included at a concentration in the range of 0.5 to 20% w/v. Preferably, the corrosion inhibitor is included at a concentration in the range of 1 to 10% w/v.

According to a second aspect of the present invention there is provided a method of coating a substrate to inhibit corrosion and biofouling at the substrate, the method comprising: preparing a sol comprising an inorganic oxide; adding a viable microorganism and a corrosion inhibitor to the sol to form a mixture; coating the substrate with the mixture; and curing the mixture on the substrate to form a sol-gel dried coating bonded to the substrate.

Preferably, the microorganism is added to the sol as a suspension wherein the microorganism is immobilised within the suspension. Optionally, the microorganism is freeze dried.

Preferably, the method comprises curing the mixture at a temperature less than 120°C. Preferably, the method comprises curing the mixture at a temperature in the range 10 to 40°C.

According to a third aspect of the present invention there is provided a substrate having a coating bonded to a substrate and configured to protect the substrate from corrosion and biofouling, the coating comprising: a first layer obtainable by a sol-gel process to create an inorganic oxide network resultant from the condensation reactions of at least one inorganic oxide, the first layer comprising a corrosion inhibitor; and a second layer obtainable by a sol-gel process to create an inorganic oxide network resultant from the condensation reactions of at least one inorganic oxide, the second layer comprising a viable microorganism, the microorganism capable of reacting chemically with microbes responsible for microbial induced corrosion or biofouling and configured to inhibit the biological activity of said microbes.

Preferably, the first layer and/or the second layer further comprises γ-alumina. Preferably, the second layer further comprises a corrosion inhibitor. Preferably, a thickness of the first layer and the second layer is substantially equal.

According to a fourth aspect of the present invention there is provided a method of coating a substrate to inhibit corrosion and biofouling at the substrate, the method comprising:
preparing a first sol comprising an inorganic oxide; adding a corrosion inhibitor to the first sol to form an first mixture; preparing a second sol comprising an inorganic oxide; adding a viable microorganism to the second sol to form a second mixture; coating the substrate with the first mixture to form a first layer; curing the first layer at the substrate to form a sol-gel derived coating bonded to the substrate; coating the first layer with the second mixture; curing the second mixture on the first layer to form a second sol-gel derived layer bonded to the first layer. Optionally, the first layer is chemically bonded to the second layer.

Preferably, the method comprises curing the first sol-gel layer at a temperature in the range 200 to 600°C. Preferably, the method comprises curing the first sol-gel layer at a temperature in the range 300 to 500°C. Preferably, the method comprises curing the second sol-gel layer at a temperature less than 120°C. Preferably, the method comprises curing the second sol-gel layer at a temperature in the range 10 to 40°C. Preferably, the method comprises adding γ-alumina to the first and/or second sol-gel layer prior to curing the first and/or second sol-gel layer.

Preferably said microorganism may comprise prokaryotic cells such as archaeic cells or bacterial cells. For example at the time of immobilisation said microorganism may comprise vegetative bacterial cells, endospores or cells in some other quiescent state. When said microrganism is in the form of vegetative cells, it is preferable that the vegetative cells are *Pseudomonas fragi.* The bacterial cells may alternatively be endospores such as those of *Paenibacillus polymyxa. Paenibacillus polymyxa* are endospore-forming organisms which produce at least one antimicrobial compound which kills bacteria associated with MIC.

The microorganism is selected for its ability to survive in harsh conditions, including pH, temperature and solvent content of the coating. In a preferred embodiment of the present invention, the suspension may be added to the sol in the volume ratio of 1:10. Preferably, said mixture is aqueous. The mixture may have a pH within the range of from 4 to 10, preferably the mixture has a pH of 7. Optional further components of the sol and suspension may include a buffering agent in the suspension and a curing agent and/or thickening agent in the sol. When the microorganism is in the form of biologically active vegetative cells at the time of immobilisation a buffering agent is incorporated into the mixture of the present invention in order to prevent the microorganism from lysing upon introduction into an aqueous solution. Upon mixing of the sol and suspension, the components of the suspension diffuse into the sol creating a semi-homogenous solution. In this way the mixture has a uniform corrosion inhibiting nature throughout the thickness of the coating. The microorganisms may react with the components of the sol, forming bonds and causing chemical reactions to take place, for example condensation reactions.

Optionally, the substrate may be metal based and may comprise any one or a combination of the following set of: iron; aluminium; titanium; copper; silver; steel; aluminium alloy; stainless steel; titanium alloy; copper alloy; magnesium alloy; silver alloy.

The substrate to which the mixture of the present invention is applied as a coating may be plastic, polymer or fibreglass based. Additionally, the substrate may comprise a combination of these materials including a plastics-metal or fibreglass-metal hybrid substrate.

In order to achieve a substrate coating of required thickness, corrosion resistance and hardness the silanes, alkyl-silanes or alkyl-modified silanes of the present invention may be mixed with other organic, inorganic or hybrid polymers to obtain the desired ormosil or ormosil hybrid sol.

The present coating may utilise any silicate based precursor including specifically an organosilicate and/or a silane based precursor including in particular an organosilane. Further, the polysiloxane component may comprise a form of polysiloxane including in particular an organopolysiloxane.

The term 'hybrid coating' within the specification refers to a sol-gel derived coating formed from at least two different silicon based precursors. Accordingly the hybrid coating of the subject invention comprises at least a first silicon centre, derived from a first precursor bonded to carbon and a second silicon centre, derived from a second precursor bonded to oxygen. That is, at least two silicon centres differ throughout the network by the number of respective carbon and/or oxygen bonds at each silicon centre.

The present coating may comprise a polysiloxane and comprise a sol-gel derived polysiloxane based coating. The polysiloxane coating may be derived from any one or a combination of the following additional precursors incorporated within the coating network during the sol-gel phase: any organically modified silane selected from the group consisting of alkylsilanes; methyltrimethoxysilane; methyltriethoxysilane; dimethyldiethoxysilane; trimethylethoxysilane; vinyltrimethoxysilane; vinyltriethoxysilane; ethyltriethoxysilane; isopropyltriethoxysilane; butyltriethoxysilane; octyltriethoxysilane; dodecyltriethoxysilane; octadecyltriethoxysilane; aryl-functional silanes; phenyltriethoxysilane; aminosilanes; aminopropyltriethoxysilane; aminophenyltrimethoxysilane; aminopropyltrimethoxysilane; acrylate functional silanes; methacrylate-functional silanes; acryloxypropyltrimethoxysilane; carboxylate; phosphonate; ester; sulfonate; isocyanate; epoxy functional silanes; chlorosilanes; chlorotrimethylsilane; chlorotriethylsilane; chlorotrihexylsilane; dichlorodimethylsilane; trichloromethylsilane; N,O-Bis (trimethylsilyl)-acetamide (BSA); N,O-Bis (trimethylsilyl) trifluoroacetamide (BSTFA); hexamethyldisilazane (HMDS); N-methyltrimethylsilyltrifluoroacetamide (MSTFA); N-methyl-N-(t-butyldimethylsilyl)trifluoroacetamide (MTBSTFA); trimethylchlorosilane (TMCS); trimethylsilyimidazole (TMSI); and combinations thereof.

The polysiloxane may comprise any one or a combination of the following groups: an alkyl; a substituted alkyl, a halosubstituted, an alkenyl, an alkynyl, a halosubstituted alkynyl, a phenyl, a substituted phenyl, a hydroxylic compound. In particular, the polysiloxane may comprise an organofunctionalised group including in particular a hydroxyl, epoxy alkoxy, silanol, amino or isocyanate group. The polysiloxane may comprise a single repeat unit or may be formed as a two, three, four or five component polysiloxane having different respective repeater units forming part of the Si-O part of the backbone. Specifically, and my way of example, the polysiloxane may comprise any one or a combination of the following compounds: Poly[dimethylsiloxane-co-[3-(2-(2-hydroxyethoxy)ethoxy)propyl]methylsiloxane]; Poly(dimethylsiloxane), bis(3-aminopropyl) terminated; Poly(dimethylsiloxane), diglycidyl ether terminated; Poly(dimethylsiloxane)-graft-polyacrylates; Poly[dimethylsiloxane-co-methyl(3-hydroxypropyl)siloxane]-graft-tetrakis(1,2-butylene glycol); Poly[dimethylsiloxane-co-(2-(3,4-epoxycyclohexyl)ethyl)methylsiloxane]; Poly[dimethylsiloxane-co-(3-aminopropyl)methylsiloxane; Poly[dimethylsiloxane-co-methyl(stearoyloxyalkyl)siloxane] and/or Poly[dimethylsiloxane-co-[3-(2-(2-hydroxyethoxy)ethoxy)propyl]methylsiloxane].

The polysiloxane preferably comprises a minimum repeat number of ten and may comprise ten, a hundred, a thousand or tens of thousands of repeat units within a single polymer backbone.

The term 'alkyl' refers to a linear, branched, cyclic, or any combination thereof hydrocarbon. The term 'substituted alkyl' refers to one or more of the hydrogens on the alkyl group being replaced by another substituent, such as cyano, alkyl, nitro, mercapto, alkylthio, halo, alkylamino, dialkylamino, alkoxy, and tri alkoxysilyl. The term 'Substituted phenyl' refers to one or more of the hydrogens on the aromatic ring being replaced by another substituent, such as cyano, alkyl, nitro, mercapto, alkylthio, halo, alkylamino, dialkylamino, and alkoxy.

Optionally, the present coating may be derived from any one or a combination of the following precursors: tetraethoxy orthosilicate (TEOS); methyltriethoxy orthosilicate (MTEOS); phenyltriethoxy orthosilicate (PTEOS); octyltriethoxy orthosilicate (OTEOS); dimethyldiethoxy orthosilicate (DMDEOS); methyltrimethoxy orthosilicate (MTMOS); phenyltrimethoxy orthosilicate (PTMOS); tetramethoxy orthosilicate (TMOS).

### Brief description of drawings

A specific implementation of the present invention will now be described, by way of example only, and with reference to the accompanying drawings in which:
Figure 1 is a SEM image of a cross section of SAPP sol-gel coated steel;
Figure 2a is an EIS Bode plot for the coated mild steel samples after 1h of immersion at room temperature in 3.5% NaCl;
Figures 2b & 2c are Nyquist plot spectra for the coated mild steel samples after 1h of immersion at room temperature in 3.5% NaCl;
Figure 3a is an EIS Bode plot spectra for the coated materials after 192h of immersion in 3.5% NaCl;
Figures 3b & 3c are Nyquist plot spectra for the coated materials after 192h of immersion in 3.5% NaCl;
Figure 4 is a plot of Rₚ (Ohms) of the inhibitor-doped sol-gel coatings over time (hours);
Figure 5a is an EIS Bode plot for the coated mild steel samples after 1h of immersion at room temperature in 3.5% NaCl;
Figure 5b is a Nyquist plot spectra for the abiotic and biotic sol-gel coated materials after 1h of immersion in 3.5% NaCl;
Figures 6a & 6b are Nyquist plot spectra for the abiotic and biotic sol-gel coated materials after 192h of immersion in 3.5% NaCl;
Figure 6c is a Nyquist spectrum for the Biotic Moly coating system after 192h of immersion in 3.5% NaCl;
Figure 7 are CLSM images of the endospore-containing (biotic) sol-gel coatings on mild steel after immersion in NB2 for 24 and 48 hours; magnification x 64 (oil immersion objective) where 7a, 7c, 7e are multi-channel images, and 7b, 7d, 7f are Left side image-FITC filter only, Right side image- Rhodamine filter only;
Figure 8 is a SEM photograph of a cross section of biotic moly sol-gel on mild steel;
Figure 9 is the contact angle for all samples before (Pre) and after (Post) immersion at in field trials at Whitby harbour;
Figure 10 is a log of impedance at 0.01 Hz of double-coated (5% ZAPP lower coat + abiotic/biotic sol-gel top coat;
Figure 11 is a Bode plot of double coat ZAPP sol-gel with abiotic or biotic top coat with or without gamma-alumina 24 hours;
Figure 12 is a comparison of ZD and ZDGA after 24 hours immersion in NaCl;
Figure 13a is a Bode impedance plot for ZAPP double coatings with abiotic and biotic top coats after 6 days immersion in NaCl;
Figure 13b is a Nyquist plot for ZAPP double coatings with abiotic and biotic top coats after 6 days immersion in NaCl;
Figure 14a is a Bode plot for abiotic and biotic sol-gel top coat on ZAPP sol-gel lower coat after immersion in 3.5% wt/vol NaCl for 19 days;
Figure 14b is a Nyquist plot for abiotic and biotic sol-gel top coat on ZAPP sol-gel lower coat after immersion in 3.5% wt/vol NaCl for 19 days;
Figure 15a is a Bode plot for ZAPP double coatings with abiotic and biotic top coats containing 1.5% wt/vol γ-alumina after immersion in 3.5% wt/vol NaCl for 23 days;
Figure 15b is a Nyquist plots for ZAPP double coatings with abiotic and biotic top coats containing 1.5% wt/vol γ-alumina after immersion in 3.5% wt/vol NaCl for 23 days;
Figure 16 is a graph of the LPR results for field trail samples immersed at Whitby harbour;
Figure 17 is the corrosion rate calculated using the LPR results shown in figure 16;
Figure 18 is the mean temperature (°C) rainfall (mm) and conductivity (milli-siemens [ms]) at Whitby during the months when LPR tests were carried out;
Figure 19 is the contact angle results for samples for single and double layer coated mild steel immersed at Whitby harbour; and
Figure 20 is the contact angle results for double layer Moly and biotic sol-gel containing KFUPM *Bacillus* strains.

### Detailed description of embodiments described herein

In general, three coating systems have been developed and their effectiveness to mitigate corrosion and biofouling assessed in both laboratory and 'real-life' environments. The three approaches may be considered and summarised as:
1. a sol-gel derived coating incorporating a corrosion inhibitor
2. a sol-gel derived coating incorporating a microorganism and a corrosion inhibitor
3. a dual or multiple layer sol-gel derived coating in which a first (lower) sol-gel layer includes a corrosion inhibitor and a second (upper) sol-gel layer includes a microorganism.

### Corrosion inhibitor doped sol-gel coating system

### Substrate

S-35 mild steel Q-panel sheets were ultrasonically cleaned for 10 minutes in industrial 'kleen ikb 401' cleaning solution and hand washed with tap water and then distilled water and finally air-dried completely before application of the coatings.

Preparation of the inhibitor doped sol-gel coatings.

### Base sol-gel solution

The sol-gel solution was firstly prepared by mixing two silanes (tetraethoxysilane [TEOS] and methyl triethoxysilane [MTEOS]) and ethanol in the ratio of 10:8:10 by volume. Water was then added drop wise (10 mL) and the solution turned brownish; 100-200 µl concentrated HNO₃ was then added drop wise. The mixture was stirred for 2 hours.

### Inhibitor-loaded sol-gel coatings

The sol-gel solution prepared above was then doped with inhibitor by dissolving the appropriate inhibitor (to 5 % w/v) into the solution. The three corrosion inhibitors used were: Shieldex (303)^{®} modified silica (SD), Moly-white® 101-ED (Moly) and Heucophos Zapp® (ZAPP).

### Coating procedure

Inhibitor-loaded sol-gel coatings were applied on mild steel panels using a K101 rod coating applicator. Inhibitor-loaded sol-gel coated samples were treated at 400 °C for 30 s in an electric oven with an air atmosphere. The peak metal temperature reached about 200°C. A section (40 mm x 78 mm) was cut from the four coated samples and the reverse-side and edges were coated with a heated (1:1) mixture of colophony (Fluka) and beeswax (Fluka) to leave a measured test area shown in Table 1.

**Table 1. Test areas of samples used to analyse EIS data**

| Sample | Area (cm²) |
|---|---|
| Sol-gel only | 19.0 |
| Moly sol-gel | 13.5 |
| SD sol-gel | 18.2 |
| ZAPP sol-gel | 17.6 |

### Coating characterization

Coated samples were analyzed using a Philips XL40 scanning electron microscope (SEM) using a beam voltage of 20 kV. Thin sputtered carbon films were applied to samples in order to prevent surface charging in the SEM. Electrochemical impedance spectroscopy (EIS) data were collected using a PARstat 2273 instrument with a saturated calomel reference electrode (saturated KCl, 0.242 V vs NHE) applying a sinusoidal potential (± 10 mV) over the frequency scan range from 0.1 MHz to 10.0 mHz being recorded at 75 points logarithmically spaced. Zsimpwin software was used to simulate data obtained to determine the best circuit diagram fit.

### Results

After application of the coatings, the samples with coatings containing the inhibitors appeared very similar and showed no visible signs of corrosion or other damage. The sample coated with sol-gel only appeared discoloured at one end, possibly indicating the onset of corrosion. EIS analysis of this sample was conducted using the parts that appeared pristine at this stage.

After 8 days immersion in 3.5 wt % NaCl, the sol-gel only sample had corroded extensively over approximately 50% of the surface area. In contrast, the sample coated with Moly sol-gel was intact, although there are small brown/orange features scattered over the surface. The sample coated with ZAPP sol-gel appears intact, with no visible corrosion. The SD-coated mild steel sample corroded more rapidly over the immersion period compared to the other samples with inhibitor-loaded coatings, with corrosion initiated over approximately 50% of the surface and some spots of advanced corrosion where the SD-containing coating appears to have lost adhesion.

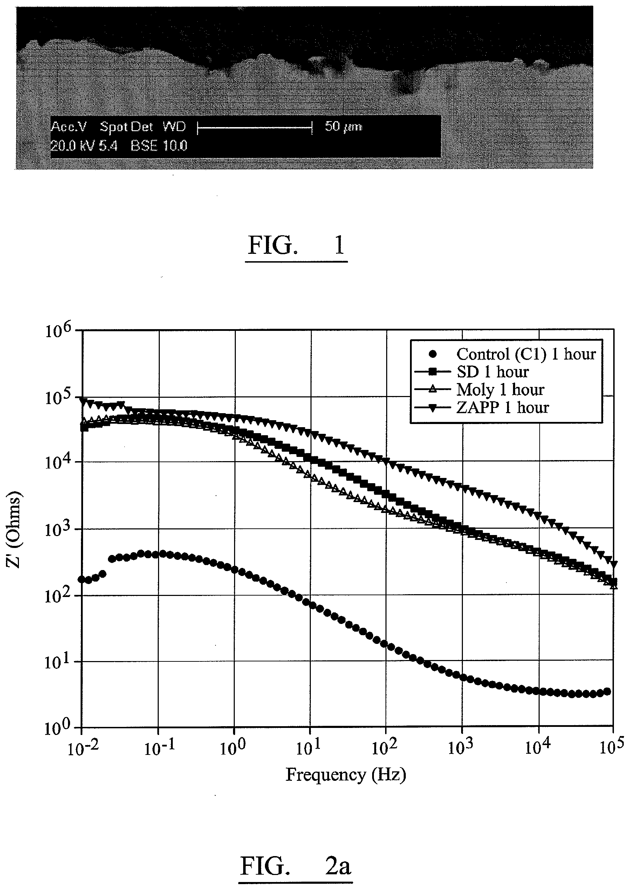

Figure 1 shows an SEM photograph of a transverse section of unpolished ZAPP-encapsulated sol-gel coated steel. It can be observed that the coating is well bonded (chemically) and is free of defects. The coating thickness is approximately 16 µm. SEM examination of the coated surfaces revealed differences in the homogeneity of the sample surfaces after 8 days immersion in NaCl. The sol-gel only coated mild steel sample appeared to have lost adhesion with the substrate surface. In contrast, the Moly sol-gel was predominantly smooth.. The ZAPP sol-gel shown in had a rough surface. At higher magnification, blistering and cracking of the coating was evident. The SD sol-gel coated sample had a rough surface and a raised white spot was observed on the surface. At higher magnification, the white spot appeared to be a blister, although at this stage no cracking of the coating was visible.

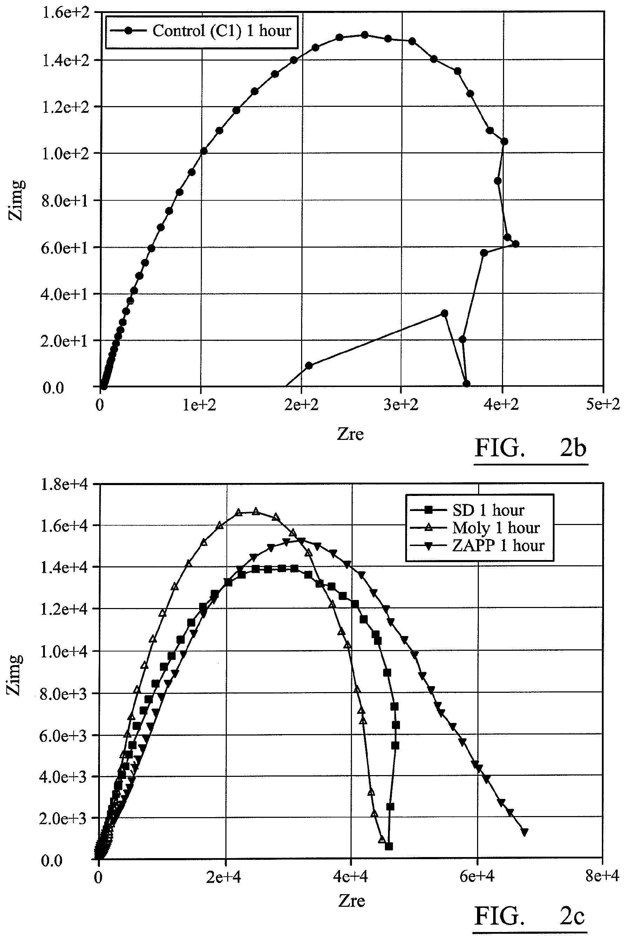

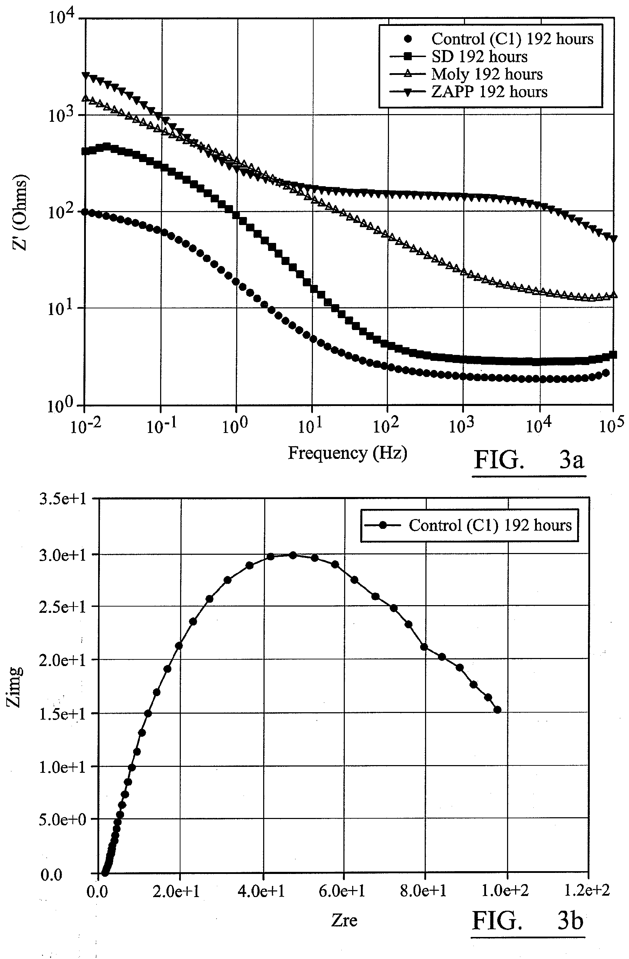

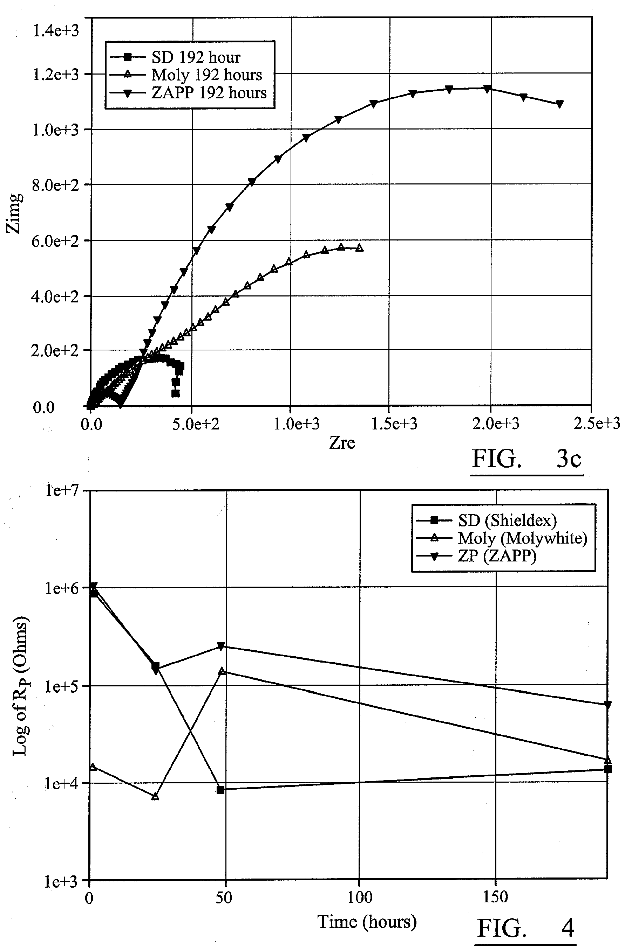

EIS was used to examine the difference in corrosion resistance between the control sample coated with sol-gel without the addition of inhibitors (sample Cl) and the inhibitor-loaded sol-gel coated samples. Generally, higher Z modulus of the coating at lower frequency indicates a higher corrosion resistance of the metal substrate (Bode plots, Figures 2a and 2a) and the shape of the Nyquist plot gives an indication of the coating impedance behaviour (Figures 2b and 3b and 3c). When using a Nyquist plot to compare different types of coating, a larger semi-circle indicates that the coating is affording protection against corrosion. Comparison of the EIS plots in Bode and Nyquist formats of all samples after short (1 h) and long (192 h) term immersion in 3.5 wt % NaCl is given in Figures 2a, 2b, 2c and 3a, 3b, 3c, respectively. The results at 192 h indicate that the ZAPP and Moly-doped sol-gel coatings provide the best corrosion protection for the mild steel substrate.

The impedance spectra were numerically fitted to equivalent circuits (EC) using ZSimpWin™ 3.21 software [Princeton Applied Research]. A constant phase element (Q) was used instead of an "ideal" capacitor, taking into account that the slopes of the curves in the Bode plots were not -1 (a value expected for an ideal capacitor) as there was an inconsistency in the fitting of the data across the timescales used if an "ideal" capacitor (C) was adopted in the equivalent circuit. These equivalent circuits were proposed and established assuming the following: (i) an electrolyte resistance (Rₛ); (ii) a sol-gel layer (Rₒ); Constant phase elements (Qₒ) and Rₒ represent the resistance of the pore or defects in the sol-gel layer in parallel with Qₒ and (iii) the properties of the intermediate layer are described by a resistance Rᵢ, in parallel with a capacitor Qᵢ [H. Wang, R. Akid, Corrosion Science, 49 (2007), 4491-4503]. After a 24 h immersion, a protective or passive layer (represented by Qₚ and Rₚ) appears to form, presumably being derived from the doped corrosion inhibitors which can form a relatively stable compound that prevents the steel from continuing to corrode [R. Naderi, M.M. Attar, Electrochimica Acta, 53 (2008) 5692-5696]. The different parameters related to the impedance measurement, derived for the SD, ZAPP doped sol-gel coating and Moly-doped sol-gel coating are given in Tables 2, 3 and 4 respectively.

**Table 2. Fitted data obtained from EIS spectra for the SD doped sol-gel coating after various immersions times in 3.5 wt. % NaCl solution**

| Sample | Element | Immersion time (h) | | | |
|---|---|---|---|---|---|
| | | 1 | 24 | 48 | 192 |
| SD | Circuit | R(QR)(QR) | R(QR)(Q(R(QR))) | R(QR)(C(R(QR))) | R(QR)(Q(R(QR))) |
| | Rₛ | 1.64E-11 | 0.1098 | 8.265E-5 | 50.61 |
| | Qₒ | 3.744E-9 | 1.504E-6 | 9.649E-5 | 0.0001409 |
| | Rₒ | 5948 | 13760 | 103600 | 8.051 |
| | Qᵢ/Cᵢ | 3.238E-7 | 9.291E-10 | 9.309E-10 | 0.0001239 |
| | Rᵢ | 889100 | 2385 | 1170 | 0.119 |
| | Qₚ | - | 3.518E-5 | 3.678E-5 | 5.899E-5 |
| | Rₚ | - | 159200 | 8378 | 12650 |

**Table 3. Fitted data obtained from EIS spectra for the ZAPP doped sol-gel coating after various immersions times in 3.5 wt. % NaCl solution**

| Sample | Element | Immersion time (h) | | | |
|---|---|---|---|---|---|
| | | 1 | 24 | 48 | 192 |
| ZAPP | Circuit | R(QR)(QR) | R(QR)(Q(R(QR))) | | |
| | Rₛ | 1.17E-7 | 0.0001404 | 0.0003896 | 90.71 |
| | Qₒ | 1.852E-9 | 2.566E-8 | 1.13E-7 | 0.0001035 |
| | Rₒ | 3.638E4 | 4184 | 5778 | 514.6 |
| | Qᵢ/Cᵢ | 1.187E-7 | 6.544E-6 | 1.72E-5 | 9.323E-8 |
| | Rᵢ | 1.017E6 | 1.513E4 | 4967 | 2542 |
| | Qₚ | | 3.98E-5 | 4.025E-5 | 8.909E-5 |
| | Rₚ | | 1.416E5 | 2.465E5 | 5.874E4 |

**Table 4. The fitted data obtained from EIS spectra for the Moly-doped sol-gel coating after various immersion times in 3.5 wt. % NaCl solution.**

| Sample | Element | Immersion time (h) | | | |
|---|---|---|---|---|---|
| | | 1 | 24 | 48 | 192 |
| Moly | Circuit | R(QR)(QR) | R(QR)(Q(R(QR))) | | |
| | Rₛ | 0.0001952 | 0.01779 | 9.99E-5 | 139 |
| | Qₒ | 6.127E-7 | 7.972E-5 | 1.83E-7 | 8.316E-5 |
| | Rₒ | 6.721E5 | 1.485E5 | 322.1 | 1.285E4 |
| | Qᵢ/Cᵢ | 2.051E-7 | 2.032E-6 | 1.055E-5 | 1.189E-5 |
| | Rᵢ | 1.432E4 | 476.2 | 5670 | 113 |
| | Qₚ | | 5.542E-6 | 9.32E-5 | 0.0006299 |
| | Rₚ | | 7232 | 1.336E5 | 1.59E4 |

The Rₚ of the systems can be plotted over time and is shown in Figure 4, where the Moly- and ZAPP-doped sol-gel coatings show a higher, 'average' corrosion resistance but with the ZAPP coating showing longer term sustained corrosion protection when compared to the Moly and SD coating formulations.

The addition of different corrosion inhibitors to a base sol-gel coating has been shown to be an alternative approach for the development of protective sol-gel coatings on mild steel. The sol-gel formulation alone was ineffective in protection the mild steel substrate from corrosion in 3.5% NaCl solution but provided a suitable matrix for the corrosion inhibitors, SD (Shieldex™), ZAPP (Heucophos ZAPP™) and Moly (Molywhite ™) since the benefit of the inhibitors was evident on visual inspection and after EIS tests. The ZAPP-doped sol-gel gave the most effective corrosion resistance, which improved over time compared with the SD and Moly systems. The corrosion resistance of the inhibitor based sol-gel coatings was found to be in the order ZAPP>Moly>SD.

### Corrosion inhibitor and microorganism doped sol-gel coating

The base sol-gel solution and inhibitor-loaded sol-gel coatings were prepared as described above for the corrosion inhibitor doped coating.

Various corrosion inhibitors and "protective" bacteria were added to sol-gel anticorrosion and antifouling systems and tested on mild steel surfaces in the laboratory under saline conditions (3.5 % Nacl) and in field trials in an estuarine environment. The effectiveness of the present coatings for corrosion protection has been evaluated via electrochemical impedance spectroscopy (EIS) and visual observation. The results indicate that the sol gel containing inhibitors or a combination of inhibitor and bacteria showed improved corrosion protection compared to the sol-gel coatings without these additives, following long-term immersion in 3.5% NaCl.

### Bacteria-loaded sol-gel coatings

A single *Paenibacillus polymyxa* ATCC 10401 colony was used to inoculate a 5 ml aliquot of NB2 broth and incubated (30°C, shaking at 180 rpm) overnight to provide a starter culture, which was used to inoculate the bioreactor. Endospores were produced from a 5-litre aerobic NB2 culture supplemented with 1% CCY salts solution in a New Brunswick Bioflo 115 5.3-litre working-volume bioreactor at a constant temperature of 30°C with an impeller speed of 200 rpm with an aeration rate of 1.5 L min⁻¹. Sporulation and lysis of mother cells were confirmed using phase contrast microscopy before harvesting the culture after 7 days fermentation. Endospores were recovered from the culture by centrifugation (17,696 × *g* at 4°C for 10 minutes in 6 × 500 ml centrifuge pots) and washed 5 times with ice-cold, sterile deionised water by resuspension and centrifugation. The washed pellet was resuspended in sterile, deionised water and sonicated on ice in 2 ml aliquots at 40% of maximum power for 25 s using a Jencons Sonics Vibra Cell probe sonicator (probe tip diameter 3 mm) to separate aggregated endospores. Any remaining vegetative cells were killed by vortexing with 0.2 ml water-saturated chloroform per ml of endospore suspension. The endospore suspension was adjusted to an OD600 of 66 with sterile distilled water before storage at -20°C.

Endospore suspension was removed from storage and allowed to defrost at room temperature, then kept on ice to prevent germination. The aqueous endospore suspension was centrifuged (16,800 x g/ 13, 200 rpm, 5 minutes, room temperature) in a micro-centrifuge, resuspended in 1 ml of sol-gel and sonicated at 40% of maximum power on ice under the conditions detailed above for 5 s to separate aggregated endospores immediately before adding to the remaining sol-gel at a ratio of 4:1 (sol-gel: sol-gel-diluted endospore suspension). Examination of the spores after sonication, using the phase-contrast microscope, confirmed that the sonication had not disrupted the spores, which remained phase-bright. Abiotic (bacteria-free) coatings were produced by replacing the bacterial suspension with deionised water and omitting the sonication steps.

### Coating procedure

Bacteria and inhibitor-loaded sol-gel coatings were applied on mild steel panels using a metal draw bar. The coatings were applied under a laminar flow hood to avoid contaminating the coatings and allowed to cure at room temperature for 24 hours. The processing route was: i) Sol-gel > inhibitor > coating and; ii) Sol-gel > Inhibitor > Endospores > Coating.

Mild steel samples were also coated with the sol-gel solution (C1) alone and with the sol-gel solution mixed with bacterial suspension (C2) as control samples.

### Coating characterization

Coated samples were analyzed using a Philips XL40 scanning electron microscope (SEM) using an beam voltage of 20 kV. Thin sputtered carbon films were applied to samples in order to prevent surface charging in the SEM. Contact angle measurements were carried out on a DataPhysics instrument using a drop of deionised water. Six replicate measurements were carried out on each sample to give a mean value. Electrochemical impedance spectroscopy (EIS) data were collected using a PARstat 2273 instrument with a saturated calomel reference electrode (saturated KCl, 0.242 V vs NHE) applying a sinusoidal potential (± 10 mV) over the frequency scan range from 0.1 MHz to 10.0 mHz being recorded at 75 points logarithmically spaced. Zsimpwin software was used to simulate data obtained to determine the best circuit diagram fit.

Bioactive coated samples were also characterized by confocal scanning laser microscopy (CLSM) to confirm endospore viability and the distribution of vegetative bacterial cells within the coating. Micrographs were obtained using a Zeiss AxioVision confocal scanning laser microscope using a Plan Apochromat ×64 oil immersion objective. Fluorescein isothiocyanate (FITC) (488 nm) and rhodamine (543 nm) filters were used for images obtained after staining with BacLight™ Live/Dead staining kit. 1.5 cm² (approximately) pieces were cut from the panels, immersed in NB2 (30°C for 24 and 48 hours), and stained using the Baclight™ Live/Dead bacterial viability stain (Invitrogen). This mixture of two DNA-binding fluorescent stains shows viable cells as green since they take up the Syto 9 stain only. Non-viable cells are also stained with propidium iodide, which binds to the DNA to give red fluorescence, but only within cells with damaged membranes where the positively charged dye can gain access to the interior. There was a certain amount of background fluorescence, apparently because the sol-gel adsorbed the Syto 9 stain, and the sol-gel pores (which contain negatively-charged silanol groups) bind the positively charged propidium iodide stain.

### Results

The ZP and Moly inhibitors were selected for use in the development of bacteria-containing protective antifouling coatings on mild steel since the coatings doped with these inhibitors showed the best corrosion protection on mild steel. The approach relied on a single coat where the inhibitor and the bacteria were encapsulated in a single sol-gel matrix coating (referred to as Biotic Moly and Biotic ZP).

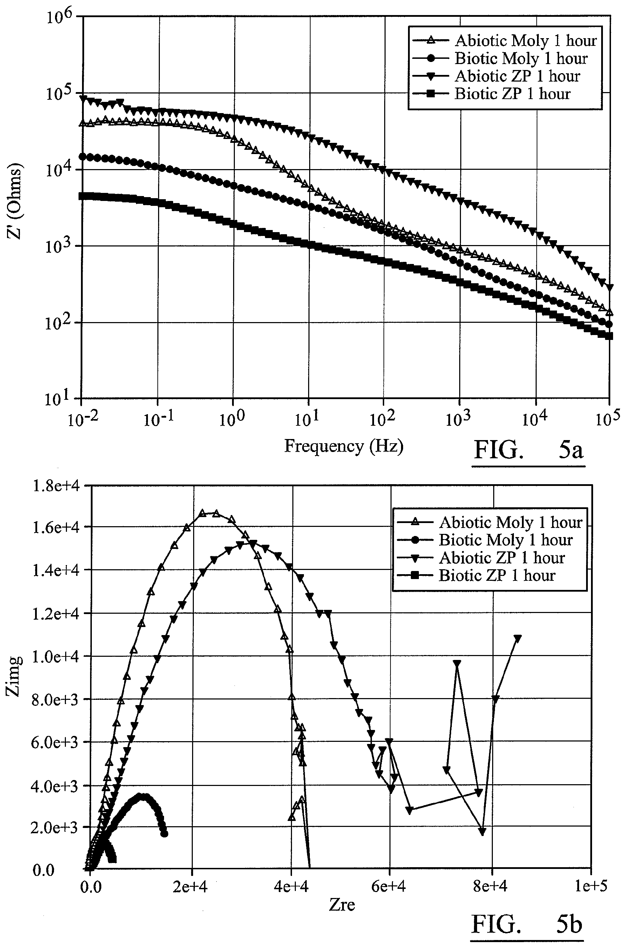

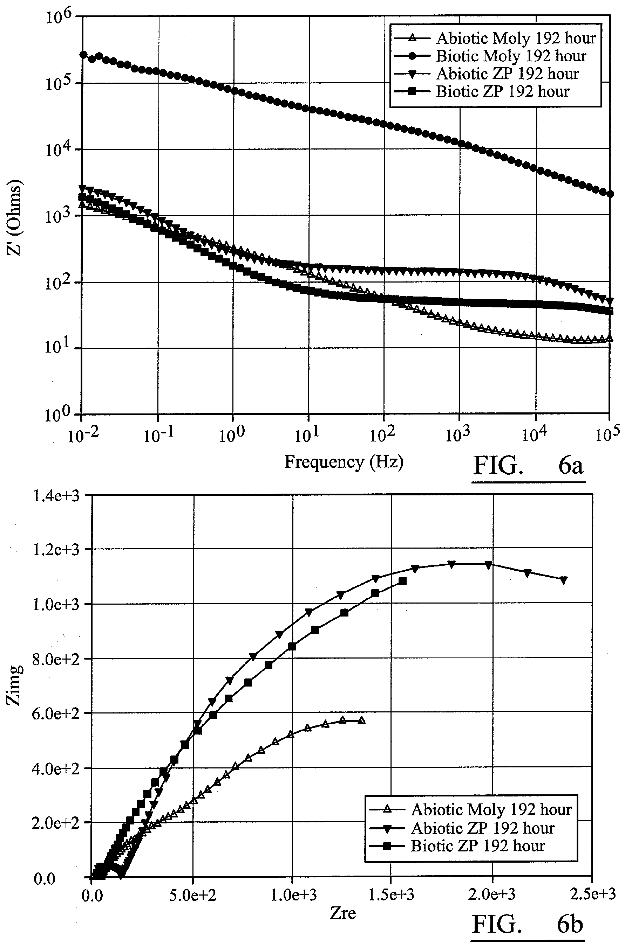

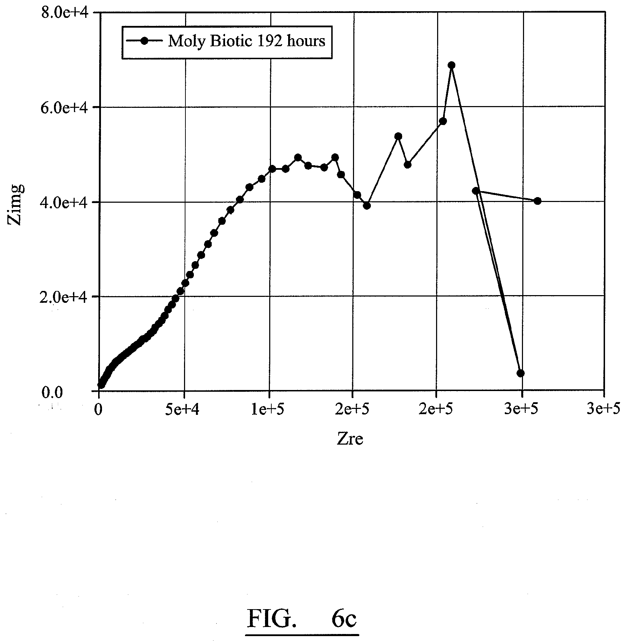

EIS data were collected after 1 h (Figures 5a and 5b) and 192 h (Figures 6a, 6b and 6c) immersion in 3.5% NaCl solution. After 192 h (Figure 6c), the Moly Biotic afforded the best corrosion inhibition of mild steel. The corrosion protection afforded by the other coating (Biotic ZP) after long term immersion in 3.5% NaCl solution was substantially less than that due to the Moly Biotic coating, which would not have been predicted from the behaviour of the coatings containing inhibitors without bacteria, where the greatest corrosion protection was given by the coating containing ZP.

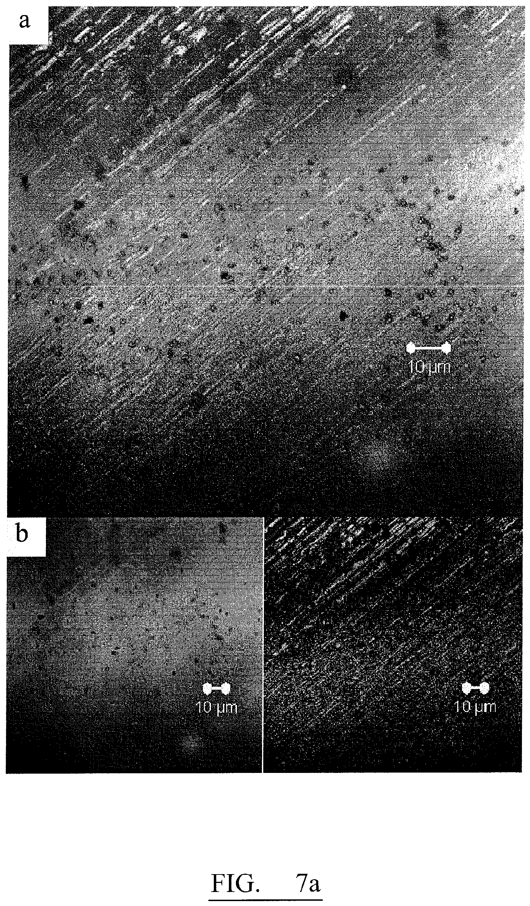

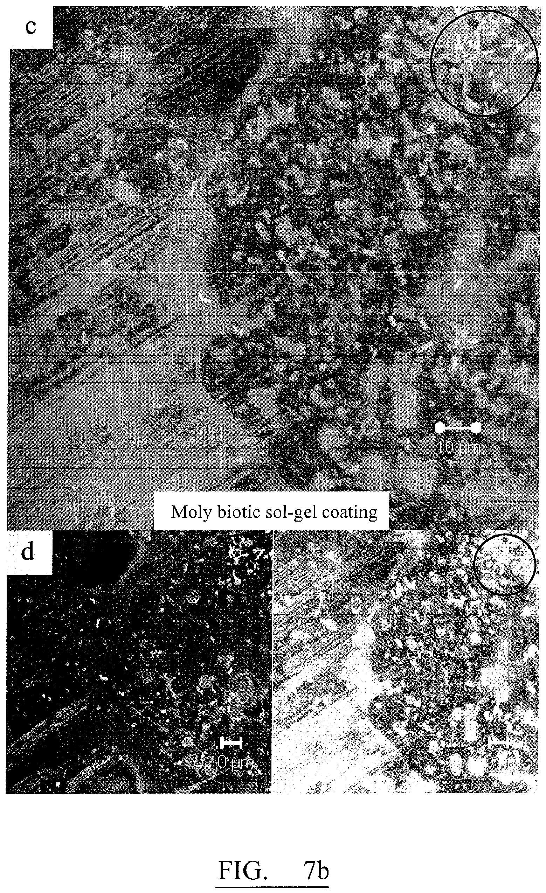

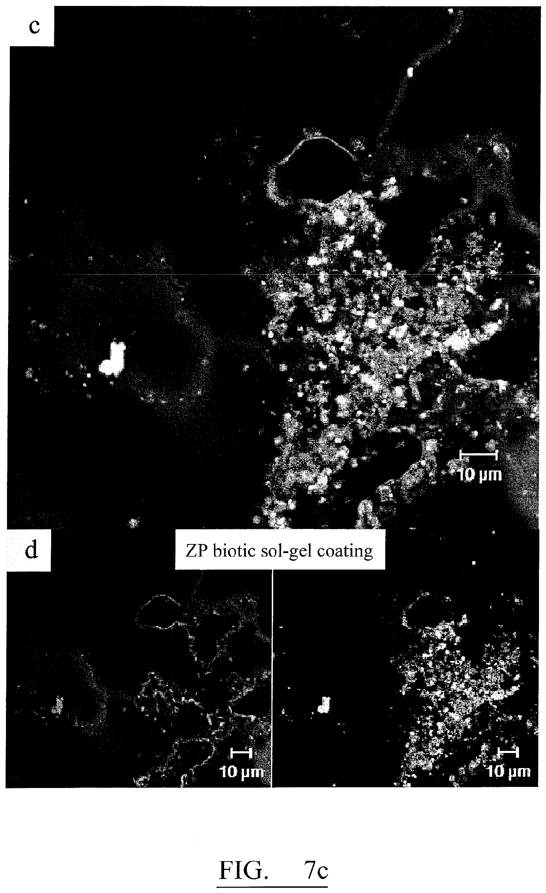

Separate pieces of mild steel coated with each of bacteria-containing sol-gel coatings were tested for viability of the encapsulated bacteria by incubation in liquid nutrient medium (NB2) at 30°C for 24 or 48 hours. Figure 7a to f present CLSM images of the biotic sol-gel coating after incubation in NB2 for 24 hours, where parallel lines seen on the left of the images indicate ridges in the surface of the mild steel. The fluorescent green rod oval shapes were observed and these are germinating endospores (7a and b). The fluorescent green rod shapes are viable cells, a group of which are circled in Figures 7c and d.

Field-trial testing of bacteria-encapsulated and control samples were conducted in sea water/estuarine environment at Whitby Harbour on the UK coast. Development of biofouling during the test was monitored by photographing the samples at time points up to 10 weeks. With the exception of cracked samples, coatings with encapsulated endospores afforded relatively good antifouling properties. After 2 weeks immersion, there were no signs of biofouling or corrosion on any of the samples. The onset of fouling was seen from week-6 onwards. The most serious fouling appeared on the abiotic sample (no endospores or inhibitors).

Slight fouling started to appear on the Moly biotic sample by week-6. At 8 weeks a central area of the abiotic sol-gel coated panel became detached during spraying with distilled water to remove silt and any non-adhered material. It can inferred that this was caused by the heavy fouling, wherein the accumulated thick biofilm created a large stress that induced cracking of the coating. After 10 weeks immersion, the samples can be ranked in terms of fouling performance as follows; abiotic (Cl) > Moly biotic > ZP biotic > biotic (C2). The biotic sol-gel sample (C2), which did not contain moly or ZP inhibitors gave the most effective antifouling behaviour while the abiotic coating (C2 -sol-gel with no inhibitors or endospores) was the least effective in preventing fouling.

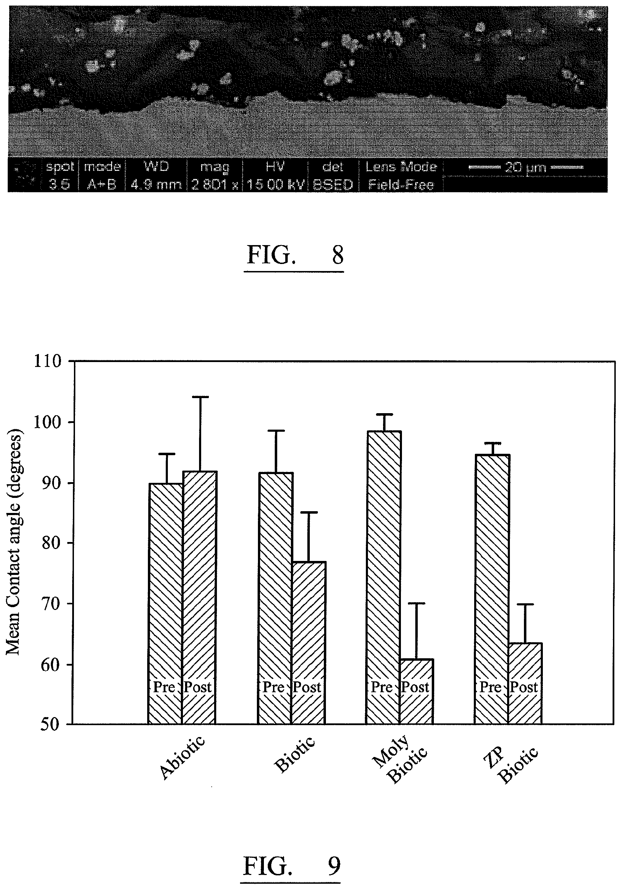

Figure 8 shows a typical SEM photograph of a cross section of biotic sol-gel coated mild steel. The mean coating thickness of the Moly biotic was 16 µm (30 points measured, standard deviation 4.5) and the ZP biotic was 15 µm (30 points measured, standard deviation 2.5).

Contact angle measurements of the coatings are presented in Figure 9. Before immersion the contact angle for all the samples was greater than 90°, indicating that the coatings are hydrophobic. There is little variation in the contact angle of the coatings. After field trial immersion testing, the contact angle of the coatings, with the exception of the abiotic sample, decreased to about 60 to 70 degree, indicating a drop in hydrophobicity.

The results of the field trials show that combining both corrosion inhibitors and protective antifouling bacteria within the sol-gel system provided a significant improvement in antifouling performance compared to sol-gel alone (abiotic).

### Dual layer corrosion inhibitor - microorganism containing systems

### Coating and sol-gel formulations

The sol-gel formulation was prepared as described above. The inhibitor loaded coating and the microbial loaded sol-gel formulations are also prepared as described above.

### Preliminary dual layer results

A mild steel panel was coated using ZAPP sol-gel with biotic sol-gel top coat and immersed at Whitby for 10 weeks. The results showed that since fouling was extensive over the panel surface it would be necessary to improve the coating formulation to improve antifouling performance.

During the field trial and after examination by nano-SEM and infinite-focus microscopy at SHU, cracking of the top (biotic sol-gel) coated was observed. The formation of some types of soft biofouling, such as algae, on metal surfaces can be promoted by surface roughness, which could be caused by a cracked coating surface.

It is possible that the surface of the coating was disrupted by the germination of endospores within the top (biotic) coating although no extensive cracking was seen using the Nano-SEM on post-immersed samples. However, there was some indication of increased pore size near the coating surface. Increased porosity, may have promoted the adhesion of the fouling organisms.

Fouling organisms such as encrusting bryozoans settle preferentially on easily wettable surfaces. The contact angle of the ZAPP/biotic sol-gel double coating decreased from 94.9° to 63.2° during the 10 weeks of the field trial, indicating the decrease in hydrophobicity was directly related to the increase in surface roughness.

### Modification of formulation to improve ZAPP double coatings

A set of ZAPP double coat (abiotic and biotic) samples were prepared using the same sol-gel formulation as described above. After 8 days immersion in 3.5% NaCl wt/vol protection performance was poor as demonstrated by cracking of the coating and low impedance at 0.01 Hz (indicating a substantial corrosion rate).

To address the anticorrosion and cracking problems, a further set of samples was prepared in the same way as above but the top abiotic and biotic coats were applied as thinly as possible. However, cracking of the biotic top coat still occurred. It is possible that the germination of endospores and the consequent growth of *Paenibacillus polymyxa* cells within the biotic top coat caused the coating to crack. γ-alumina can be added to the sol-gel formulation to support the sol-gel structure and does not compromise encapsulated endospore cell viability. γ-alumina increases the flexibility of the sol-gel to allow for the growth of cells within the coating by allowing movement in both the horizontal plane and away from the substrate and does not compromise production of enzymes and bio-active species by encapsulated bacterial cells.

Further EIS tests were carried out on mild steel coupons coated with a lower sol-gel-coat containing 5% ZAPP and abiotic or biotic sol-gel top coats to investigate the issue. To address cracking of the top sol-gel coat, 1.5% wt/vol γ-alumina (Al₂O₃ nanopowder >50 nm particle size) was added to the topcoats, which were either abiotic or biotic sol-gel.

ZAPP sol-gel was prepared by adding 5% wt/vol Heucophos™ ZAPP corrosion inhibitor powder to AF1 sol-gel and sonicated for 10 minutes. 250 µl of the ZAPP sol-gel was used to coat mild steel coupons (Q panel) measuring 10 x 2.5 cm after cleaning the coupons with ethanol. The abiotic ZAPP coating layer was cured at 400°C for 30 seconds. 250 µl of either abiotic or biotic top coat was then applied over the ZAPP sol-gel layer using a draw bar under the laminar hood to avoid contamination. The final coated samples were allowed to cure at room temperature for 24 hours.

Double coated mild steel coupons (5% wt/vol ZAPP sol-gel lower coat with either an abiotic or a biotic sol-gel top coat) were prepared for electrochemical impedance testing by covering an exposed steel areas with Scotch™ Super 88 insulating tape leaving only the coated area exposed to the electrolyte. The bottom of the coupon was also coated with beeswax. An identical set of samples was prepared but having 1.5% γ-alumina added to the top abiotic and top biotic layers. The test areas are shown in Table 5 and Table 6.

**Table 5. Test areas of ZAPP double samples with no γ-alumina**

| Sample | Test area (cm²) |
|---|---|
| ZAPP double abiotic 1 | 7.14 |
| ZAPP double abiotic 2 | 6.63 |
| ZAPP double biotic 1 | 6.24 |
| ZAPP double biotic 2 | 7.28 |

**Table 6. Test areas of ZAPP double samples with 1.5% wt/vol γ-alumina**

| Sample | Test area (cm²) |
|---|---|
| ZAPP double abiotic GA 1 | 7.56 |
| ZAPP double abiotic GA 2 | 6.24 |
| ZAPP double biotic GA 1 | 6.63 |
| ZAPP double biotic GA 2 | 5.94 |

All coated coupons were immersed in 3.5% (wt/vol) NaCl solution. EIS tests were carried out on a PARstat 2273 instrument using a saturated calomel reference electrode (saturated KCl, 0.242 V vs NHE) applying a sinusoidal potential (10 mV) over the frequency scan range from 0.1 MHz to 10.0 mHz being recorded at 75 points logarithmically spaced.

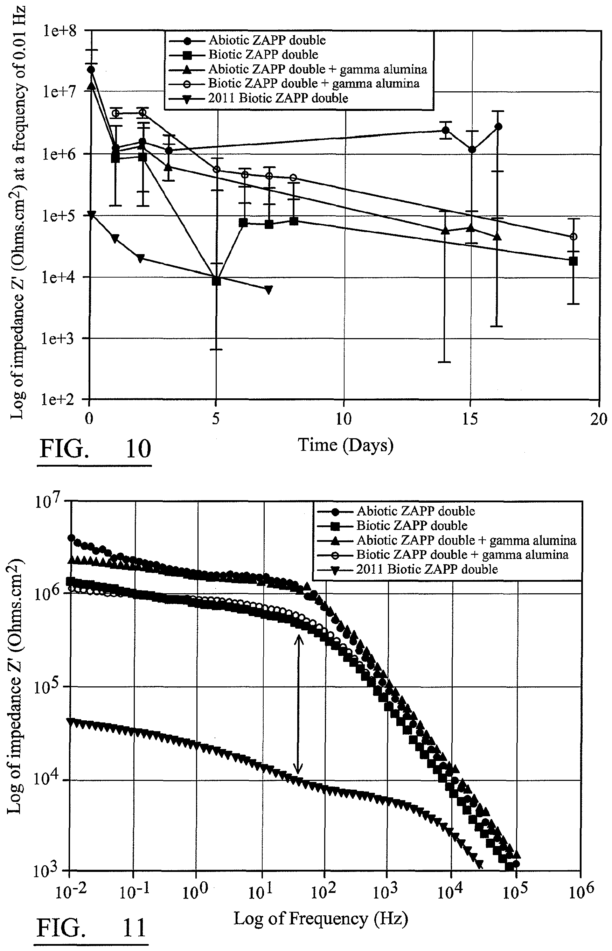

The EIS tests were carried out for different periods of time however it is possible to see that the addition of 1.5% wt/vol γ-alumina to the top sol-gel coat over the lower ZAPP sol-gel coat increases the corrosion inhibiting properties of the double coat (Figure 10). At the 7 day point, there is little difference in two abiotic sol-gel coatings (Figure 10, ABZD and ABZD GA) on mild steel. However, the addition of 1.5% wt/vol γ-alumina to the biotic top coating appears to make a significant difference i.e. the impedance of the BZD GA coating at 0.01 Hz at the 7 day point is an order of magnitude higher than the BZD coating where the biotic sol-gel top coat does not contain 1.5% wt/vol γ-alumina. In comparison to the 2011 BZD (ZAPP double biotic coating), both the BZD and BZD GA samples tested in 2012 had higher impedance (Figure 10).

After 24 hours of immersion in NaCl, there was little difference in the Bode plots for the ZAPP double coated (abiotic and biotic top coat) samples with and without γ-alumina made in 2012. The Bode plot for the ZAPP double biotic sample used for the EIS in 2011 shows lower impedance and is a different shape (Figure 11).

It is possible to see the effect of the double layer on impedance data since there is a distinct change in the angle of the slope of the Bode plots at 5 x 101 Hz (arrowed in Figure 11). The data show that the double layer ZAPP with abiotic top coat gives better corrosion protection since the impedance is greater over the frequency range used.

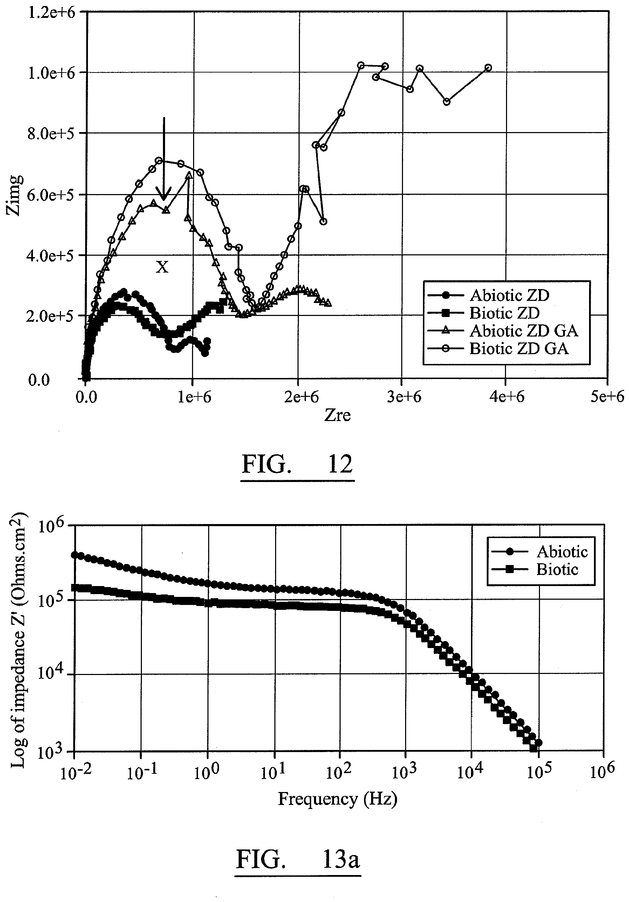

The Nyquist plot for the ZAPP double coatings shows that after 24 hours of immersion in NaCl, there is little difference in the shape of the spectra for the abiotic and biotic coatings with γ-alumina. The abiotic variant has higher impedance at this time-point and this can be seen on the Nyquist data as a higher capacitive semicircle (arrowed in Figure 12). Data for the abiotic and biotic coatings with γ-alumina has a single erratic data point at 48.89 Hz (indicated by X on Figure 12) and may be a feature of the coatings rather than error. The most obvious difference between the coatings with and without γ-alumina is the shape of the second semicircle. The coatings without γ-alumina have a higher second semicircle for both abiotic and biotic variants. After 6 days immersion in NaCl, there were differences in the appearance of the abiotic and biotic sol-gel top coats. In comparison to the abiotic ZAPP double coating, the biotic has a speckled appearance and there were signs of corrosion around the upper right corner, near the tape.

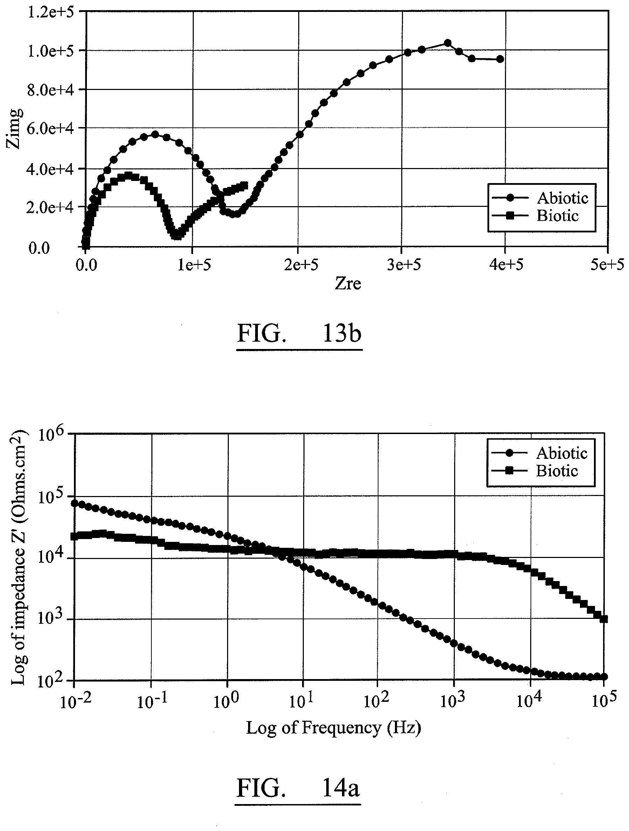

Figure 13a shows the Bode impedance and Figure 13b the Nyquist plot for the ZAPP double coated samples with either an abiotic and biotic top coat (no γ - alumina) after 6 days immersion in 3.5% NaCl. The data is in agreement with the observable deterioration of the coating surface i.e. the impedance value is lower for the biotic top coated ZAPP double sample and the radius of the Nyquist semicircle(s) is shorter.

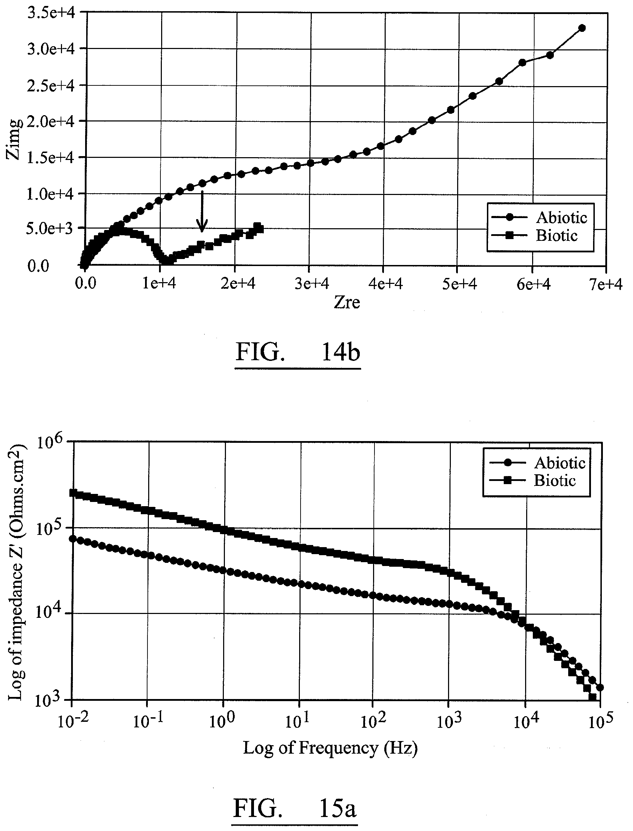

The final EIS measurements on the ZAPP double coat system without the addition of gamma-alumina were carried out on day 19. There were now distinct differences in the Bode and Nyquist plots for the coatings with abiotic compared with biotic top coats (Figures 14a and 14b). The influence of the top coating appears to be indicated by data collected from 1 x 105 to 1 x 16 10⁴ Hz, where the resistance of the biotic coating is greater by an order of magnitude. However, the presence of cracks in the biotic top coat results in diffusion, which is shown by the straight line extending at an angle from the semicircle for the biotic data (indicated by an arrow in Figures 14a and 14b). Although at higher frequencies of 1 x10⁵ to 1 x 10⁴ the resistance offered by the biotic coating is enhanced, cracking of the top coat results in diffusion and lowers the overall impedance value.

The final EIS measurements on the ZAPP double coat system with 1.5% wt/vol γ -alumina were carried out on day 23. In contrast to the images obtained for previous samples where the onset and progression of cracking can be seen, the image of this system showed that after 23 days cracking was significantly reduced, with only a few sites of corrosion observed. The abiotic and biotic coatings had similar appearances.

The Bode plots shown in Figure 15a show that adding 1.5% wt/vol γ-alumina to the abiotic and biotic sol-gel top coat had a beneficial effect. The impedance of both abiotic and biotic ZAPP double variants was higher at 0.01 Hz, with the abiotic ZAPP double having around the same value at 23 days as the abiotic ZAPP double without γ-alumina had after 16 days immersion. The impedance at 0.01 Hz of the biotic ZAPP double with γ-alumina was higher by an order of magnitude (Figure 15a) than the equivalent coatings without gamma alumina (Figure 14a and 14b) even after an additional week of immersion (23 days).

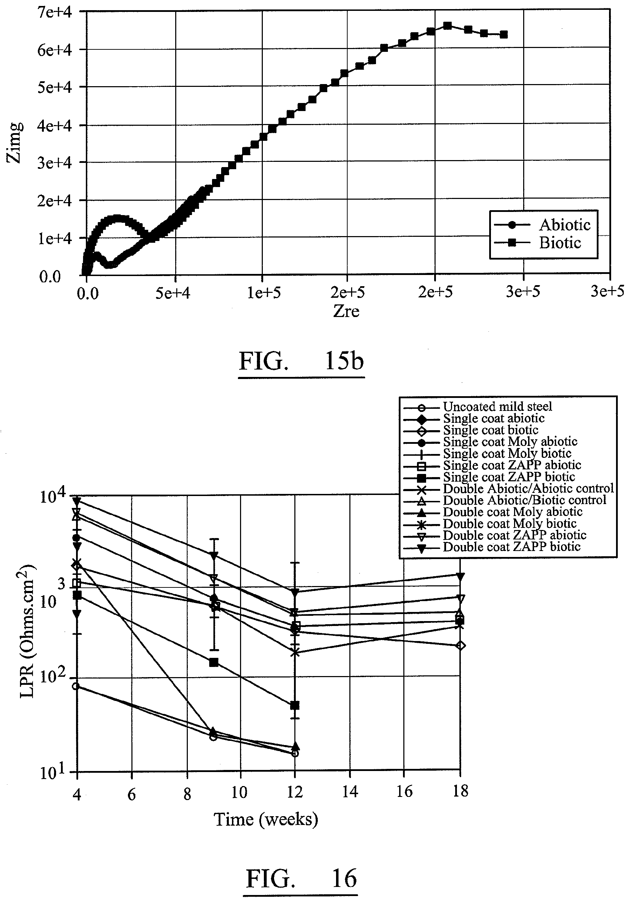

The Nyquist plots (Figure 15b) for the abiotic and biotic ZAPP double coatings have a similar shape; a distinct semicircle at the higher frequencies and a second time constant. The second time constant for the abiotic coating appears to be a diffusion element, whereas that for the biotic coating is a second semicircle.

In order to improve antifouling performance in the field environment, the structural integrity of the top coat required improvement. It was found that the addition of 1.5% wt/vol γ-alumina to the abiotic and biotic top coat reduced the formation of cracks in the surface. Cracking was seen in the biotic top-coat, for previous field trial samples and this may have encouraged the settlement and adhesion of soft biofouling organisms, resembling algae and encrusting bryozoans. After poor initial performance in EIS tests, a further set of samples was prepared using the same sol-gel formulation with no additions but the top coatings were applied more thinly. This was not sufficient to reduce cracking. 1.5% wt/vol γ-alumina was to the abiotic and biotic top coat for a further series of EIS tests. This resulted in improvements in coating performance and the reduction of cracking, which is confirmed by the EIS results.

In order to optimise the antifouling capabilities of the double coat systems, it is necessary to ensure that cracking of the coatings does not occur. Laboratory EIS tests have, in turn, shown that the reduction in surface cracking increases the overall corrosion performance and longevity of the coatings.

### Field Trials

### Method and sample preparation

At the point of immersion the flow of seawater was minimal. The panels were suspended into the harbour seawater (Whitby harbour, North Yorkshire) from a floating dry dock and were immersed continuously.

Contact angle measurements were carried out using a DataPhysics instrument (Carl Stuart LTD), which photographs the water droplet as it touches the surface and then measures the angle of contact at both sides of the droplet. The contact angle of a drop of water on the coating surface was measured to provide an indication of the hydrophobicity of the coatings. 23

A set of single and double layer sol-gel samples were prepared for immersion in the estuarine water at Whitby harbour. The sol-gel formulation for the top layer of the double-coated samples was adapted after EIS tests revealed an improvement where 1.5% γ-alumina (Al₂O₃ nanopowder <50 µm particle size). The samples were prepared as previously, with the lower layer of the double coated samples (5% ZAPP or 5% Molywhite-doped sol-gel) cured at 400°C for 30 seconds and the upper abiotic or biotic sol-gel coat cured at room temperature. Double layer ZAPP & abiotic/biotic sol-gel coatings used for field trial.

Following the preliminary results above, a set of ZAPP double coated mild steel panels have been prepared with 1.5% wt/vol γ-alumina added to the abiotic and biotic top coat. To monitor the effect of the coating formulation and configuration on corrosion inhibition, LPR testing was carried out at the field trial location. An insulated steel wire was connected to the sample surface using a plastic screw and nut and glued in with weatherproof, corrosion resistant epoxy adhesive to provide electrical contact between the potentiostat and each panel. The screw assembly was sealed using silicon sealant and the mild steel panels covered with Scotch™ Super 88 insulation tape.

Further samples were prepared by spot-welding wire to the reverse of the panel. A spot of corrosion resistant epoxy adhesive was used to seal over the weld area and the sample was covered with insulation tape to leave the test area. The wire was covered with heat-shrink and the end of the wire sealed.

LPR measurements were carried out using a Uniscan hand-held potentiostat with a saturated calomel (KCl) reference electrode. To observe the effect of the coatings on biofouling inhibition, images of both the uncoated and coated sides of all samples were obtained approximately once per month using a digital camera.

Further images of all samples were obtained in the laboratory using the same digital camera. The surface of one of each type of sample was wiped with a sterile swab to obtain biofilm samples for DNA analysis, which were stored at -20°C.

### Results

For uncoated mild steel (control) and single abiotic and biotic-coated panels, corrosion was observed on the uncoated panel. The abiotic coating was intact apart from a small area of corrosion, but there was extensive soft, brown fouling. The biotic coated panel was corroded, but in an entirely different manner to the uncoated panel. Blue/black mottled appearance of the surface did not appear to be the result of fouling.

After 9 weeks immersion, the progression of corrosion was seen on the uncoated panel. The single abiotic coating delaminated and there was increased fouling in comparison to that seen at 4 weeks. Corrosion had progressed on the biotic single-coated panel.

After 12 weeks, there was build-up of fouling on the abiotic panel and corrosion on the lower half of the biotic coated panel. At 18 weeks, a large area of the abiotic coating became detached after the panel was rinsed with seawater and immediately before the image was obtained. It is notable that despite the loss of coating adhesion, no corrosion has occurred under the coating. Most samples were made in duplicate, and a second abiotic single coated panel had corroded in a similar way to the biotic single coated panel above. The abiotic coated panel had a rougher surface and appears to be fouled. The biotic coated panel was darker and the surface did not appear to be fouled. After 9 weeks, the replicate single abiotic and biotic sol-gel coated panels showed further corrosion, although the biotic single-coated panel does not appear to have fouled.

Referring to the single coat Moly sol-gel coated panels, the abiotic panels had soft, brown fouling over the surface, although this was not dense at this stage. The single coated Moly coatings appeared intact in comparison to the coatings with no inhibitors which showed areas of coating loss. Biofouling was seen on the abiotic single Moly-coated panels whereas the biotic single Moly-coated panels appeared to be free of biofouling. There were spots of corrosion on the biotic Moly single-coated panels. After 9 weeks immersion, localized corrosion was seen over the entire surface of the single coat abiotic panels. Some delaminated areas were seen on one of the single coat abiotic panels. The single coat biotic panels had fewer areas of localized corrosion and did not appear to have any coating loss at this stage. After 12 weeks, where delamination of the abiotic coated panel has occurred, there was a large area of corrosion. After 18 weeks, the abiotic Moly coated panels have corroded more than the biotic Moly coated panels.

Control double coatings, with abiotic sol-gel (no inhibitors) as the lower coat with either abiotic or biotic sol-gel as the top coat were prepared to observe the effect of double coatings with not inhibitors. After 4 weeks, the abiotic double coating is relatively intact, with little fouling. An area at the top of the coating had detached, leading to the onset of corrosion. The abiotic/biotic double coating has a similar 'speckled' appearance to the single biotic coatings as above. After 9 weeks, the abiotic/abiotic double coating had corroded further and there was fouling around the bottom of the panel. The abiotic/biotic double coating had further discolouration and corrosion. After 12 weeks, there was more fouling on the abiotic/abiotic panel and a large corroded area has appeared. The abiotic/biotic coated panel has corroded further at the top of the panel. After 18 weeks, around 50% of the test area of the abiotic/abiotic panel had corroded or has suffered detachment of the coating. The abiotic/biotic panel has not corroded any further.

Raised areas of a lighter colour on all double coat Moly with abiotic/biotic top coat panels indicated the onset of blistering. This had progressed on the double-coat Moly with biotic sol-gel top coat panels, where areas of the coating had lost adhesion from the substrate and detached completely giving the surface a speckled appearance. After 9 weeks immersion, the blistering was seen as white areas and after 4 weeks had progressed into coating loss. The double-coated Moly biotic panels inhibited fouling to a greater extent than the double-coated Moly abiotic panels. The panels changed little after this point in terms of corrosion and fouling until the end of the field trial at week 18.

The double-coat inhibitor with biotic sol-gel top coat panels prepared for the subsequent field trials appear to have improved antifouling properties than those prepared in the intial trial, possibly as a result of the added 1.5% wt/vol γ-alumina.

LPR measurements were carried out in natural seawater at the field trial location. A sample of seawater was collected to establish the conductivity each time since the estuarine location is subject to varying salinity as a result of rainfall. The parameters used for the tests were as follows: Sweep Potential 1 (V): -0.020; Sweep Potential 2 (V): 0.020; Sweep Rate (V/Sec): 0.000167; V per point (V): 0.001. The results are shown in Figure 16.

Tafel constants for all coating types were obtained using a scan range of -250mV/+750 mV (vs OCP) at a scan rate of 0.166 mV/s (Table 7 and Table 8). The tests were carried out in filter-sterilised natural seawater collected from Whitby.

**Table 7. Tafel constant for single layer coatings and uncoated mild steel**

| | Uncoated Mild steel | Single Abiotic | Single Biotic | Single Moly Abiotic | Single Moly Biotic | Single ZAPP Abiotic | Single ZAPP Biotic |
|---|---|---|---|---|---|---|---|
| E(I=0) (mV): | -426.6 | -649.4 | -516.2 | -451.9 | -464.6 | -683.2 | -513.8 |
| Icorr (µA) | 149.9 | 69.6 | 4.0 | 0.8 | 0.2 | 0.4 | 0.3 |
| *b_{c}* (mV) | 5.7E+02 | 5.5E+02 | 3.5E+02 | 6.5E+01 | 2.3E+02 | 3.8E+02 | 2.9E+02 |
| *bₐ* (mV) | 2.9E+01 | 8.6E+01 | 2.2E+02 | 1.6E+02 | 7.7E+01 | 1.2E+02 | 1.3E+02 |
| Corrosion rate (mmpy) | 2.2E-05 | 1.1E-05 | 3.0E-07 | 1.9E-07 | 3.1E-08 | 8.8E-08 | 6.7E-08 |

**Table 8. Tafel constant for double layer coatings on mild steel**

| | Double Moly Abiotic | Double Moly Biotic | Double ZAPP Abiotic | Double ZAPP Biotic |
|---|---|---|---|---|
| E(I=0) (mV): | -447.5 | -564.0 | -514.1 | -542.2 |
| Icorr (µA) | 0.2 | 0.9 | 0.6 | 0.2 |
| *b_{c}* (mV) | 2.7E+02 | 2.6E+02 | 2.0E+02 | 4.7E+02 |
| *bₐ* (mV) | 4.9E+01 | 3.3E+02 | 5.5E+02 | 3.5E+02 |
| Corrosion rate (mmpy) | 3.7E-08 | 7.7E-05 | 2.8E-08 | 2.2E-08 |

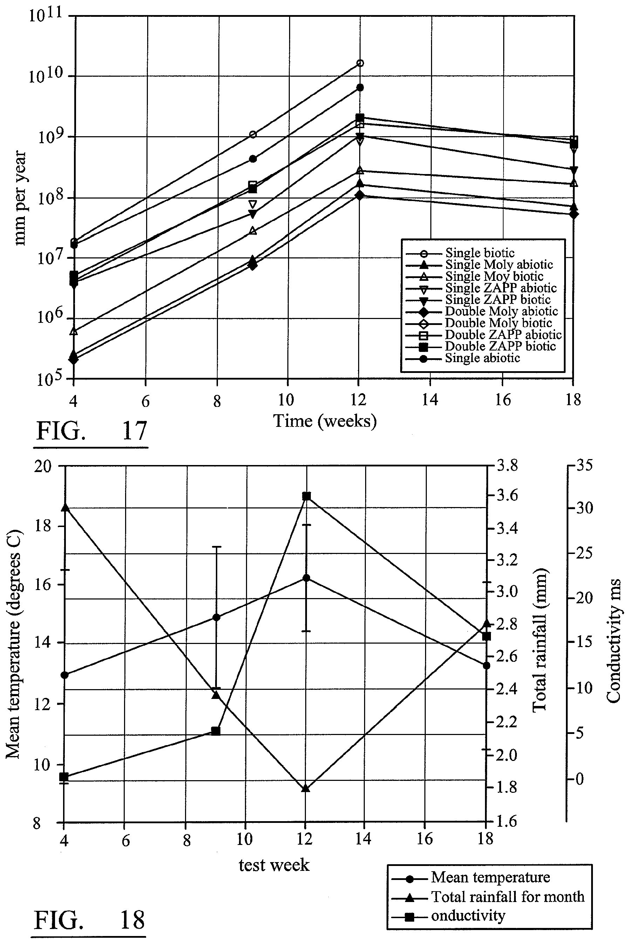

By using the Tafel constants shown in Table 7 and Table 8, the corrosion rate of the samples immersed at Whitby harbour was calculated and the results are shown in Figure 17. The abiotic coatings containing Molywhite corrosion inhibitor; single Moly abiotic and double layer Moly with abiotic top coat have the lowest corrosion rate (6.3E+07 and 5.1E+07 mm per year) at 18 weeks. The single Moly biotic and single ZAPP biotic have a corrosion rate of ∼ 1.5E+08 and 2.7E+08 mm per year, with the single ZAPP biotic having a corrosion rate of 5.9E+08 mm per year at 18 weeks. The double ZAPP with biotic sol-gel top coat has the next highest corrosion rate of 6.8E+08 mm per year and the highest corrosion rate is seen for the double ZAPP abiotic (7.1E+08 mm per year) and the double layer Moly with biotic top coat (7.9E+08 mm per year).

These results appear to contradict the earlier results, since by rating the appearance of the coating surfaces the double layer ZAPP biotic appears to be less corroded than the single Moly abiotic or double layer Moly with abiotic top coat samples. The data shown in Figure 17 was corrected to remove variation arising from differences in conductivity over the test period shown (from 4 to 18 weeks). Since Whitby harbour is an estuarine environment, the conductivity changes as the salinity of the water is decreased by rainfall and increased in dry periods. The mean temperature and rainfall are shown with conductivity in figure 18.

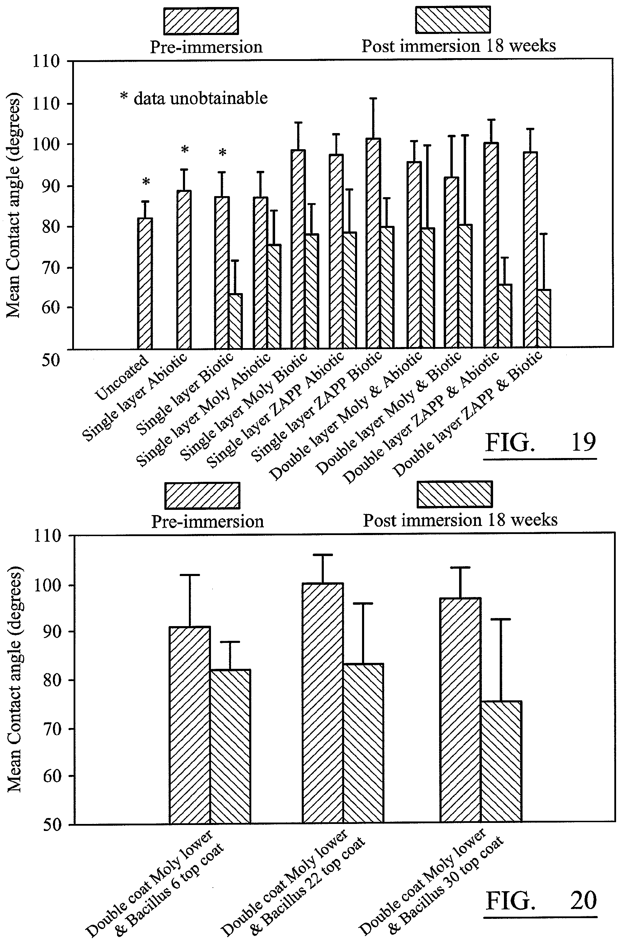

Contact angle measurements for all the samples were obtained before immersion at Whitby. The results were obtained from measurements in 6 areas of each coating area. The highest contact angles were seen on the single Moly biotic, the single ZAPP abiotic, the single ZAPP biotic, the double layer ZAPP abiotic and double layer ZAPP biotic coatings as shown in figure 19.

After 18 weeks immersion at Whitby, the samples were returned to SHU and dried out. Contact angle measurements were obtained as before, with the exception of the uncoated mild steel and the single abiotic coating. It was not possible to obtain any contact angle measurements since the water bubble was flattened onto the sample surface on contact. The coatings containing inhibitors had greater contact angles, with the exception of the double layer ZAPP with abiotic or biotic top coat, which changed the most following immersion and were around the same value as the contact angle seen for the single biotic coating.

### Bacillus strains - Field trial evaluation

Three of the four *Bacillus* species were chosen for encapsulation in sol-gel to investigate possible antifouling activity. *Bacillus* 6, 22 and 30 were encapsulated in sol-gel and applied to a Moly-doped lower layer on mild steel panels. *Paenibacillus polymyxa* biotic coatings were used to provide a positive control and abiotic (sol-gel only) as a negative control. The Molywhite corrosion inhibitor was chosen after superior corrosion inhibition was seen in laboratory EIS tests in comparison to the ZAPP-doped sol-gel lower layer.

Three 10 ml aliquots of NB2 broth was inoculated with one of each bacterium and incubated overnight at 45°C (30°C for *P. polymyxa*), shaking at 180 rpm. The starter cultures were used to inoculate three 1 litre flasks of NB2 with the addition of 1% CCY salts and these were incubated at 45°C, shaking at 180 rpm for one week. *Paenibacillus polymyxa* endospores were incubated at 30°C. Sporulation and lysis of mother cells were confirmed using phase contrast microscopy before harvesting the culture after 7 days incubation. Endospores were recovered from the culture by centrifugation (17,696 × g at 4°C for 10 minutes in 6 × 500 ml centrifuge pots) and washed 5 times with ice-cold, sterile deionised water by resuspension and centrifugation. The washed pellet was resuspended in sterile, deionised water and sonicated on ice in 2 ml aliquots at 40% of maximum power for 25 s using a Jencons Sonics Vibra Cell probe sonicator (probe tip diameter 3 mm) to separate aggregated endospores. Any remaining vegetative cells were killed by vortexing with 0.2 ml water-saturated chloroform per ml of endospore suspension. The endospore suspension was adjusted to an OD600 of 66 with sterile distilled water before storage at - 20°C. Sporulation was confirmed using phase contrast microscopy. The aqueous endospore suspension was centrifuged (16,800 x g/ 13, 200 rpm, 5 minutes, room temperature) in a micro-centrifuge, resuspended in 1 ml of sol-gel and sonicated at 40% of maximum power on ice under the conditions detailed above for 5 s to separate aggregated endospores immediately before adding to the remaining sol-gel at a ratio of 4:1 (sol-gel : sol-gel-diluted endospore suspension). Examination of the spores after sonication, using the phase-contrast microscope, confirmed that the sonication had not disrupted the spores, which remained phase-bright. The *Bacillus* 6, 22 and 30 sol-gel was mixed on a magnetic stirrer for 3 days before the coatings were applied using a draw bar.

The coated panels were immersed at Whitby and were examined and photographed at approximately 1 month intervals. After 4 weeks immersion of the double coat Moly abiotic with biotic (*P. polymyxa, Bacillus* 6, 22 and 30) top coat the *P. polymyxa* and *Bacillus* 6 Moly double coatings had little fouling. The *Bacillus* 22 Moly double coating had large patches of localized corrosion and slight fouling and the *Bacillus* 30 Moly double coating had more extensive fouling.

Regarding the double coat Moly coatings with and without bacteria there were areas of coating loss visible on the *P. polymyxa* Moly double coating. The *Bacillus* 6 Moly double coating appears to have superior performance in terms of fouling inhibition and structural integrity. The localized corrosion seen on the *Bacillus* 22 Moly double coating did not appear to have progressed further. The *Bacillus* 30 Moly double coating surface blistered however there was no noticeable coating loss at this stage.

After 12 weeks immersion, biofouling and small areas of coating loss were seen all the samples. There was more adhered fouling on the abiotic sol-gel coated sample compared to the biotic coated samples. The *Bacillus* 6 and the *P. polymyxa* inhibited fouling to a similar extent.

Figure 20 shows the change in contact angle after immersion at Whitby harbour of the double layer Moly sol-gel with encapsulated *Bacillus* 6, 22 and 30 endospores. A mean contact angle was obtained using measurements taken in 6 different areas on the coating surface. After immersion, the distribution of test areas was limited by disruption of the coating surface. The results show that although the Moly double coating containing encapsulated *Bacillus* 6 gave superior corrosion and fouling inhibition, the contact angle was marginally lower than the coatings containing *Bacillus* 22 and 30 endospores both before and after the 18 week immersion period.

All the coatings with encapsulated endospores have exhibited less fouling than the abiotic control. The *Bacillus* 22 endospores appeared to cause the coating surface to become disrupted and areas of localized corrosion were seen at an early stage. Loss of coating adhesion is observed after 12 weeks may be the result of coating application rather than incompatibility of the endospores.

## Claims

1. A substrate having a coating bonded to the substrate and configured to protect the substrate from corrosion and biofouling, the coating having a sol-gel derived inorganic oxide network resultant from condensation reactions of at least one inorganic oxide; the coating comprising:
a viable microorganism incorporated within the coating, the microorganism capable of reacting chemically with microbes responsible for microbial induced corrosion and/or biofouling and configured to inhibit the biological activity of said microbes; and
a corrosion inhibitor configured to inhibit corrosion and/or biofouling at the substrate;
wherein the microorganism and the corrosion inhibitor are separate species.

2. The substrate as claimed in claim 1 wherein the microorganism comprises any one or a combination of the following;
• prokaryotic cells
• archaeal cells
• bacterial cells
• endospores.

3. The substrate as claimed in claim 1 wherein the corrosion inhibitor comprises any one or a combination of the following set of:
• a modified orthophosphate
• a polyphosphate
• a calcium modified silicone gel
• a lithium grease
• a synthetic hydrocarbon oil
• a mineral oil
• an organic molybdenum compound.

4. The substrate as claimed in claim 1 wherein the inorganic oxide comprises any one or a combination of the set of:
• a metal oxide
• an aluminate-based compound
• a silica based compound
• a hybrid organic-inorganic compound
• an ormosil or ormosil hybrid.

5. The substrate as claimed in claim 1 wherein the inorganic oxide comprises any one or a combination of the set of:
• tetramethoxysilane (TMOS);
• tetraethoxysilane (TEOS);
• 3-glycidoxypropylmethoxysilane (GLYMO);
• methyletryoxysilane (MTEOS).

6. A method of coating a substrate to inhibit corrosion and biofouling at the substrate, the method comprising:
preparing a sol comprising an inorganic oxide;
adding a viable microorganism as a first component and a corrosion inhibitor as a second component to the sol to form a mixture;
coating the substrate with the mixture; and
curing the mixture on the substrate to form a sol-gel dried coating bonded to the substrate;
wherein the microorganism and the corrosion inhibitor are separate species.

7. The method as claimed in claim 6 wherein the microorganism is added to the sol as a suspension wherein the microorganism is immobilised within the suspension.

8. The method as claimed in claim 6 comprising curing the mixture at a temperature in the range 10 to 40°C.

9. A substrate having a coating bonded to a substrate and configured to protect the substrate from corrosion and biofouling, the coating comprising:
a first layer having a sol-gel derived inorganic oxide network resultant from the condensation reactions of at least one inorganic oxide, the first layer comprising a corrosion inhibitor; and
a second layer having a sol-gel derived inorganic oxide network resultant from the condensation reactions of at least one inorganic oxide, the second layer comprising a viable microorganism, the microorganism capable of reacting chemically with microbes responsible for microbial induced corrosion or biofouling and configured to inhibit the biological activity of said microbes;
wherein the microorganism and the corrosion inhibitor are separate species.

10. The substrate as claimed in claim 12 wherein the first layer and/or the second layer further comprises γ-alumina.

11. The substrate as claimed in claim 9 wherein the microorganism comprises any one or a combination of the following set of:
• prokaryotic cells
• archaeal cells
• bacterial cells
• endospores.

12. The substrate as claimed in claim 9 wherein the corrosion inhibitor comprises any one or a combination of the following set of:
• a modified orthophosphate
• a polyphosphate
• a calcium modified silicone gel
• a lithium grease
• a synthetic hydrocarbon oil
• a mineral oil
• an organic molybdenum compound.

13. The substrate as claimed in claim 9 wherein the inorganic oxide comprises any one or a combination of the set of:
• a metal oxide
• an aluminate-based compound
• a silica based compound
• a hybrid organic-inorganic compound
• an ormosil or ormosil hybrid;
or any one or a combination of the set of:
• tetramethoxysilane (TMOS);
• tetraethoxysilane (TEOS);
• 3-glycidoxypropylmethoxysilane (GLYMO);
• methyletryoxysilane (MTEOS).

14. A method of coating a substrate to inhibit corrosion and biofouling at the substrate, the method comprising:
preparing a first sol comprising an inorganic oxide;
adding a corrosion inhibitor to the first sol to form an first mixture;
preparing a second sol comprising an inorganic oxide;
adding a viable microorganism being a separate species to the corrosion inhibitor to the second sol to form a second mixture;
coating the substrate with the first mixture to form a first layer;
curing the first layer at the substrate to form a sol-gel derived coating bonded to the substrate;
coating the first layer with the second mixture;
curing the second mixture on the first layer to form a second sol-gel derived layer bonded to the first layer.

15. The method as claimed in claim 14 comprising:
curing the first sol-gel layer at a temperature in the range 200 to 600°C; and
curing the second sol-gel layer at a temperature less than 120°C.

## Patentansprüche

1. Substrat, das eine Beschichtung hat, die an das Substrat gebunden ist und so konfiguriert ist, dass sie das Substrat vor Korrosion und Biofouling schützt, wobei die Beschichtung ein von einem Sol-Gel abgeleitetes anorganisches OxidNetzwerk hat, das aus Kondensationsreaktionen von mindestens einem anorganischen Oxid resultiert; wobei die Beschichtung einen lebensfähigen Mikroorganismus, der in die Beschichtung eingearbeitet ist, wobei der Mikroorganismus in der Lage ist, chemisch mit Mikroben zu reagieren, die für mikrobiell induzierte/s Korrosion und/oder Biofouling verantwortlich sind, und konfiguriert ist, um die biologische Aktivität der Mikroben zu inhibieren; und
einen Korrosionsinhibitor, der konfiguriert ist, um Korrosion und/oder Biofouling an dem Substrat zu inhibieren, umfasst,
wobei der Mikroorganismus und der Korrosionsinhibitor getrennte Spezies sind.

2. Substrat, wie in Anspruch 1 beansprucht, wobei der Mikroorganismus ein beliebiges oder eine Kombination der Folgenden umfasst:
• prokaryotische Zellen
• archaeale Zellen
• bakterielle Zellen
• Endosporen.

3. Substrat, wie in Anspruch 1 beansprucht, wobei der Korrosionsinhibitor ein beliebiges oder eine Kombination der folgenden Gruppe aus:
• einem modifizierten Orthophosphat
• einem Polyphosphat
• einem Calcium-modifizierten Silikongel
• einem Lithiumfett
• einem synthetischen Kohlenwasserstofföl
• einem Mineralöl
• einer organischen Molybdänverbindung
umfasst.

4. Substrat, wie in Anspruch 1 beansprucht, wobei das anorganische Oxid ein beliebiges oder eine Kombination der Gruppe aus:
• einem Metalloxid
• einer Aluminat-basierten Verbindung
• einer Silica-basierten Verbindung
• einer organisch-anorganischen Hybridverbindung
• einem Ormosil oder Ormosil-Hybrid
umfasst.

5. Substrat, wie in Anspruch 1 beansprucht, wobei das anorganische Oxid ein beliebiges oder eine Kombination der Gruppe aus:
• Tetramethoxysilan (TMOS);
• Tetraethoxysilan (TEOS);
• 3-Glycidoxypropylmethoxysilan (GLYMO);
• Methyletryoxysilan (MTEOS)
umfasst.

6. Verfahren zur Beschichtung eines Substrats, um Korrosion und Biofouling an dem Substrat zu inhibieren, wobei das Verfahren umfasst:
Herstellen eines Sols, das ein anorganisches Oxid umfasst;
Zusetzen eines lebensfähigen Organismus als eine erste Komponente und eines Korrosionsinhibitors als eine zweite Komponente zu dem Sol unter Bildung eines Gemisches;
Beschichten des Substrats mit dem Gemisch und
Härten des Gemischs auf dem Substrat unter Bildung einer getrockneten Sol-Gel-Beschichtung, die an das Substrat gebunden ist;
wobei der Mikroorganismus und der Korrosionsinhibitor getrennte Spezies sind.

7. Verfahren, wie in Anspruch 6 beansprucht, wobei der Mikroorganismus als eine Suspension zu dem Sol gegeben wird, wobei der Mikroorganismus innerhalb der Suspension immobilisiert ist.

8. Verfahren, wie in Anspruch 6 beansprucht, das Härten des Gemisches bei einer Temperatur im Bereich von 10 bis 40°C umfasst.

9. Substrat, das eine Beschichtung hat, die an das Substrat gebunden ist und konfiguriert ist, um das Substrat vor Korrosion und Biofouling zu schützen, wobei die Beschichtung umfasst:
eine erste Schicht, die ein von einem Sol-Gel abgeleitetes anorganisches Oxidnetzwerk hat, das aus den Kondensationsreaktionen wenigstens eines anorganischen Oxids resultiert, wobei die ersten Schicht einen Korrosionsinhibitor umfasst, und
eine zweite Schicht, die ein von einem Sol-Gel abgeleitetes anorganisches Oxidnetzwerk hat, das aus den Kondensationsreaktionen von mindestens einem anorganischen Oxid resultiert, wobei die zweite Schicht einen lebensfähigen Mikroorganismus umfasst,
wobei der Mikroorganismus in der Lage ist, chemisch mit Mikroben zu reagieren, die für mikrobiell induzierte/s Korrosion oder Biofouling verantwortlich sind, und der konfiguriert ist, um die biologische Aktivität der Mikroben zu inhibieren;
wobei der Mikroorganismus und der Korrosionsinhibitor getrennte Spezies sind.

10. Substrat, wie in Anspruch 12 beansprucht, wobei die erste Schicht und/oder die zweite Schicht außerdem γ-Aluminiumoxid umfassen/umfasst.

11. Substrat, wie in Anspruch 9 beansprucht, wobei der Mikroorganismus ein beliebiges oder eine Kombination aus der folgenden Gruppe aus:
• prokaryotischen Zellen
• archaealen Zellen
• bakteriellen Zellen
• Endosporen
umfasst.

12. Substrat, wie in Anspruch 9 beansprucht, wobei der Korrosionsinhibitor ein beliebiges oder eine Kombination der folgenden Gruppe aus:
• einem modifizierten Orthophosphat
• einem Polyphosphat
• einem Calcium-modifizierten Silikongel
• einem Lithiumfett
• einem synthetischen Kohlenwasserstofföl
• einem Mineralöl
• einer organischen Molybdänverbindung
umfasst.

13. Substrat, wie in Anspruch 9 beansprucht, wobei das anorganische Oxid ein beliebiges oder eine Kombination der Gruppe aus:
• einem Metalloxid
• einer Aluminat-basierten Verbindung
• einer Silica-basierten Verbindung
• einer organisch-anorganischen Hybridverbindung
• einem Ormosil oder Ormosil-Hybrid;
oder ein beliebiges oder eine Kombination der Gruppe aus:
• Tetramethoxysilan (TMOS);
• Tetraethoxysilan (TEOS);
• 3-Glycidoxypropylmethoxysilan (GLYMO);
• Methyletryoxysilan (MTEOS)
umfasst.

14. Verfahren zur Beschichtung eines Substrats, um Korrosion und Biofouling an dem Substrat zu inhibieren, wobei das Verfahren umfasst:
Herstellen eines ersten Sols, das ein anorganisches Oxid umfasst;
Zugeben eines Korrosionsinhibitors zu dem ersten Sol unter Bildung eines ersten Gemisches;
Herstellen eines zweiten Sols, das ein anorganisches Oxid umfasst;
zugeben eines lebensfähigen Mikroorganismus, der gegenüber dem Korrosionsinhibitor eine getrennt Spezies ist, zu dem zweiten Sol unter Bildung eines zweiten Gemisches;
Beschichten des Substrats mit dem ersten Gemisch unter Bildung einer ersten Schicht;
Härten der ersten Schicht auf dem Substrat unter Bildung einer von einem Sol-Gel abgeleiteten Beschichtung, die an das Substrat gebunden ist;
Beschichten der ersten Schicht mit dem zweiten Gemisch;
Härten des zweiten Gemischs auf der ersten Schicht unter Bildung einer zweiten von einem Sol-Gel abgeleiteten Schicht, die an die erste Schicht gebunden ist.

15. Verfahren, wie in Anspruch 14 beansprucht, umfassend:
Härten der ersten Sol-Gel-Schicht bei einer Temperatur im Bereich von 200 bis 600°C und
Härten der zweiten Sol-Gel-Schicht bei einer Temperatur von weniger als 120°C.

## Revendications

1. Substrat ayant un revêtement lié au substrat et conçu pour protéger le substrat contre la corrosion et l'encrassement biologique, le revêtement ayant un réseau d'oxyde inorganique dérivé d'un sol-gel résultant de réactions de condensation d'au moins un oxyde inorganique ; le revêtement comprenant :
un micro-organisme viable incorporé au sein du revêtement, le micro-organisme étant capable de réagir chimiquement avec les microbes responsables d'une corrosion et/ou d'un encrassement biologique induit par des microbes et conçu pour inhiber l'activité biologique desdits microbes ; et
un inhibiteur de corrosion conçu pour inhiber une corrosion et/ou un encrassement biologique sur le substrat ;
dans lequel le micro-organisme et l'inhibiteur de corrosion sont des espèces séparées.

2. Substrat selon la revendication 1, dans lequel le micro-organisme comprend l'un quelconque ou une combinaison des suivants ;
• des cellules procaryotes
• des cellules d'archée ;
• des cellules bactériennes
• des endospores.

3. Substrat selon la revendication 1, dans lequel l'inhibiteur de corrosion comprend l'un quelconque ou une combinaison des suivants :
• un orthophosphate modifié
• un polyphosphate
• un gel de silicone modifié au calcium
• une graisse au lithium
• une huile hydrocarbonée synthétique
• une huile minérale
• un composé de molybdène organique.

4. Substrat selon la revendication 1, dans lequel l'oxyde inorganique comprend l'un quelconque ou une combinaison des suivants :
• un oxyde métallique
• un composé à base d'aluminate
• un composé à base de silice
• un composé hybride organique/inorganique
• un ormosil ou un ormosil hybride.

5. Substrat selon la revendication 1, dans lequel l'oxyde inorganique comprend l'un quelconque ou une combinaison des suivants :
• le tétraméthoxysilane (TMOS) ;
• le tétraéthoxysilane (TEOS) ;
• le 3-glycidoxypropylméthoxysilane (GLYMO) ;
• le méthylétryoxysilane (MTEOS).

6. Procédé de revêtement d'un substrat pour inhiber la corrosion et l'encrassement biologique sur le substrat, le procédé comprenant :
la préparation d'un sol comprenant un oxyde inorganique ;
l'ajout d'un micro-organisme viable en tant que premier composant et d'un inhibiteur de corrosion en tant que second composant au sol pour former un mélange ;
le revêtement du substrat avec le mélange ; et
le durcissement du mélange sur le substrat pour former un revêtement sec de sol-gel lié au substrat ;
dans lequel le micro-organisme et l'inhibiteur de corrosion sont des espèces séparées.

7. Procédé selon la revendication 6, dans lequel le micro-organisme est ajouté au sol sous la forme d'une suspension dans laquelle le micro-organisme est immobilisé au sein de la suspension.

8. Procédé selon la revendication 6, comprenant le durcissement du mélange à une température située dans la plage allant de 10 à 40 °C.

9. Substrat ayant un revêtement lié à un substrat et conçu pour protéger le substrat contre la corrosion et l'encrassement biologique, le revêtement comprenant :
une première couche ayant un réseau d'oxyde inorganique dérivé d'un sol-gel résultant des réactions de condensation d'au moins un oxyde inorganique, la première couche comprenant un inhibiteur de corrosion ;
une seconde couche ayant un réseau d'oxyde inorganique dérivé d'un sol-gel résultant des réactions de condensation d'au moins un oxyde inorganique, la seconde couche comprenant un micro-organisme viable,
le micro-organisme étant capable de réagir chimiquement avec les microbes responsables d'une corrosion ou d'un encrassement biologique induit par des microbes et conçu pour inhiber l'activité biologique desdits microbes ;
dans lequel le micro-organisme et l'inhibiteur de corrosion sont des espèces séparées.

10. Substrat selon la revendication 12, dans lequel la première couche et/ou la seconde couche comprend en outre de l'alumine γ.

11. Substrat selon la revendication 9, dans lequel le micro-organisme comprend l'un quelconque ou une combinaison des suivants ;
• des cellules procaryotes
• des cellules d'archée ;
• des cellules bactériennes
• des endospores.

12. Substrat selon la revendication 9, dans lequel l'inhibiteur de corrosion comprend l'un quelconque ou une combinaison des suivants :
• un orthophosphate modifié
• un polyphosphate
• un gel de silicone modifié au calcium
• une graisse au lithium
• une huile hydrocarbonée synthétique
• une huile minérale
• un composé de molybdène organique.

13. Substrat selon la revendication 9, dans lequel l'oxyde inorganique comprend l'un quelconque ou une combinaison des suivants :
• un oxyde métallique
• un composé à base d'aluminate
• un composé à base de silice
• un composé hybride organique/inorganique
• un ormosil ou un ormosil hybride ;
ou l'un quelconque ou une combinaison des suivants :
• le tétraméthoxysilane (TMOS) ;
• le tétraéthoxysilane (TEOS) ;
• le 3-glycidoxypropylméthoxysilane (GLYMO) ;
• le méthylétryoxysilane (MTEOS).

14. Procédé de revêtement d'un substrat pour inhiber la corrosion et l'encrassement biologique sur le substrat, le procédé comprenant :
la préparation d'un premier sol comprenant un oxyde inorganique ;
l'ajout d'un inhibiteur de corrosion au premier sol pour former un premier mélange ;
la préparation d'un second sol comprenant un oxyde inorganique ;
l'ajout d'un micro-organisme viable qui est une espèce séparée de l'inhibiteur de corrosion au second sol pour former un second mélange ;
le revêtement du substrat avec le premier mélange pour former une première couche ;
le durcissement de la première couche sur le substrat pour former un revêtement dérivé de sol-gel lié au substrat ;
le revêtement de la première couche avec le second mélange ;
le durcissement du second mélange sur la première couche pour former une seconde couche dérivée de sol-gel liée à la première couche.

15. Procédé selon la revendication 14, comprenant :
le durcissement de la première couche de sol-gel à une température située dans la plage allant de 200 à 600 °C ; et
le durcissement de la seconde couche de sol-gel à une température inférieure à 120 °C.
